(19) Europäisches Patentamt / European Patent Office / Office européen des brevets

(11) **EP 4 375 312 A1**

(12) **EUROPEAN PATENT APPLICATION**
published in accordance with Art. 153(4) EPC

(43) Date of publication:
**29.05.2024 Bulletin 2024/22**

(21) Application number: **22845976.4**

(22) Date of filing: **21.07.2022**

(51) International Patent Classification (IPC):
***C08G 77/392*** (2006.01) ***C08K 5/01*** (2006.01)
***C08L 83/04*** (2006.01)

(52) Cooperative Patent Classification (CPC):
**C08G 77/392; C08K 5/01; C08L 83/04**

(86) International application number:
**PCT/JP2022/028405**

(87) International publication number:
**WO 2023/003043 (26.01.2023 Gazette 2023/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2021 JP 2021121048**

(71) Applicants:
- **OSAKA UNIVERSITY**
  **Suita-shi**
  **Osaka 565-0871 (JP)**
- **SHIN-ETSU CHEMICAL CO., LTD.**
  **Tokyo 1000005 (JP)**

(72) Inventors:
- **TAKASHIMA, Yoshinori**
  **Suita-shi, Osaka 565-0871 (JP)**
- **HARADA, Akira**
  **Suita-shi, Osaka 565-0871 (JP)**
- **OSAKI, Motofumi**
  **Suita-shi, Osaka 565-0871 (JP)**
- **PARK, Junsu**
  **Suita-shi, Osaka 565-0871 (JP)**
- **YOSHIDA, Daichi**
  **Suita-shi, Osaka 565-0871 (JP)**
- **NAKAGAWA, Hideo**
  **Tokyo 100-0005 (JP)**
- **IGARASHI, Minoru**
  **Annaka-shi, Gunma 379-0224 (JP)**
- **KATO, Nobu**
  **Annaka-shi, Gunma 379-0224 (JP)**
- **KAMEI, Masanao**
  **Annaka-shi, Gunma 379-0224 (JP)**
- **OGURA, Kentaro**
  **Annaka-shi, Gunma 379-0224 (JP)**

(74) Representative: **Vossius & Partner**
**Patentanwälte Rechtsanwälte mbB**
**Siebertstrasse 3**
**81675 München (DE)**

# (54) SILICONE-BASED POLYMER COMPOUND AND SILICONE-BASED POLYMER MATERIAL

(57) Provided are a novel silicone-based polymer compound with excellent mechanical properties and a silicone-based polymer material containing the silicone-based polymer compound. The silicone-based polymer compound of the present invention is a silicone-based polymer compound (H) having a polysiloxane backbone as the main chain, wherein the polysiloxane backbone has at least one host group in a side chain, and the host group is a monovalent group formed by removing one hydrogen atom or one hydroxy group from a cyclodextrin or a cyclodextrin derivative.

Fig. 1

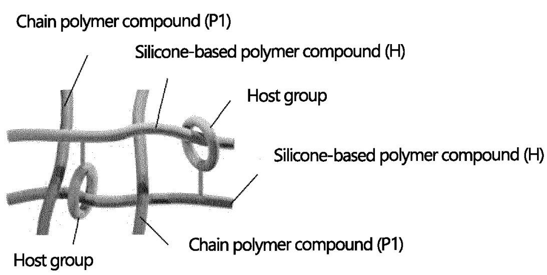


EP 4 375 312 A1

## Description

Technical Field

The present invention relates to a silicone-based polymer compound and a silicone-based polymer material.

Background Art

Silicone-based polymer compounds (polysiloxanes), which have siloxane bonds (Si-O bonds) in their main backbone, are known to have unique properties not found in organic polymers and have applications in various areas. Siloxane bonds have greater bonding strength than carbon-carbon or carbon-oxygen bonds in common organic polymers and are chemically stable. Thus, polysiloxanes formed with repeating siloxane bonds, for example, have excellent heat resistance and weather resistance. Because polysiloxanes can also form a helical structure with inorganic siloxane bonds inside and organic side-chain substituents outside, polysiloxanes are flexible, water-repellent, and less biotoxic. Therefore, polysiloxanes are a highly valuable material in various applications, such as medical instruments, rubber, paint, and protective films.

There have been attempts to impart additional functionality to such polysiloxane-based materials. For example, NPL 1 suggests a technique of introducing hydrogen-bindable functional groups into the polysiloxane backbone to develop self-healing properties through hydrogen bonds of such functional groups.

Citation List

Non-patent Literature

NPL 1: Adv. Mater. 2018, 30, 1706846

Summary of Invention

Technical Problem

There is strong demand for polysiloxanes with further functionality added with the aim of using them in a variety of areas. In particular, silicone materials, such as polysiloxanes, are expected to have applications in various areas due to their properties different from those of general-purpose resins. Therefore, there is strong demand from industry for the development of novel silicone materials. For example, novel silicone-based polymer compounds with excellent mechanical properties are extremely valuable.

The present invention was made in view of the current circumstances. An object of the present invention is to provide a novel silicone-based polymer compound with excellent mechanical properties and a silicone-based polymer material containing the silicone-based polymer compound.

Solution to Problem

The present inventors conducted extensive research to achieve the above object, and found that the object can be achieved by introducing a specific functional group into a silicone-based polymer compound with a polysiloxane backbone for the main chain. Then, they completed the present invention.

Specifically, the present invention includes, for example, the subject matter described in the following items.

Item 1. A silicone-based polymer compound (H) having a polysiloxane backbone as a main chain, wherein

the polysiloxane backbone has at least one host group in a side chain, and
the host group is a monovalent group formed by removing one hydrogen atom or one hydroxy group from a cyclodextrin or a cyclodextrin derivative.

Item 2. A silicone-based polymer compound (G) having a polysiloxane backbone as a main chain, wherein

the polysiloxane backbone has at least one guest group in a side chain, and
the guest group is a group includable in a cyclodextrin or a cyclodextrin derivative.

Item 3. A silicone-based polymer compound (HG) having a polysiloxane backbone as a main chain,

wherein

the polysiloxane backbone has at least one host group in a side chain and at least one guest group in a side chain,
the host group is a monovalent group formed by removing one hydrogen atom or one hydroxy group from a cyclodextrin or a cyclodextrin derivative, and
the guest group is a group includable in the cyclodextrin or cyclodextrin derivative.

Item 4. The silicone-based polymer compound according to Item 1 or 3, wherein a thioether bond is present between Si in the polysiloxane backbone and the host group.

Item 5. A silicone-based polymer material comprising

the silicone-based polymer compound (H) of Item 1, and
the silicone-based polymer compound (G) of Item 2, wherein the host group includes the guest group.

Item 6. A silicone-based polymer material comprising the silicone-based polymer compound (HG) of Item 3, wherein the host group and the guest group are intermolecularly bound.

Item 7. A silicone-based polymer material comprising a crosslinked structure containing the silicone-based polymer compound (H) of Item 1,
wherein the crosslinked structure has a structure in which the at least one host group of the silicone-based polymer compound (H) is penetrated by the main chain of another silicone-based polymer compound (H).

Item 8. The silicone-based polymer material of Item 7, further comprising a chain polymer compound (P1), wherein the chain polymer compound (P1) penetrates a network of the crosslinked structure.

Item 9. A silicone-based polymer material comprising
a crosslinked structure containing

the silicone-based polymer compound (H) of Item 1, and
a chain polymer compound (P1),

wherein the crosslinked structure has a structure in which the at least one host group of the silicone-based polymer compound (H) is penetrated by the chain polymer compound (P1).

Item 10. A silicone-based polymer material comprising

the silicone-based polymer compound (H) of Item 1 and
a chain polymer compound (P2) other than the silicone-based polymer compound (H),

wherein

the chain polymer compound (P2) has at least one host group in a side chain, and the host group is a monovalent group formed by removing one hydrogen atom or one hydroxy group from a cyclodextrin or a cyclodextrin derivative,
the at least one host group of the silicone-based polymer compound (H) is penetrated by the main chain of another silicone-based polymer compound (H), and
the at least one host group of the chain polymer compound (P2) is penetrated by the main chain of another chain polymer compound (P2).

Item 11. An optical material comprising the silicone-based polymer compound of any one of Items 1 to 4.

Item 12. An optical material comprising the silicone-based polymer material of any one of Items 5 to 10.

Item 13. A method for producing the silicone-based polymer compound of any of Items 1 to 4, comprising
reacting a polysiloxane compound with at least one compound containing an alkenyl group,
wherein the polysiloxane compound has an -SH group and/or an -Si-H group.

Advantageous Effects of Invention

The silicone-based polymer compound according to the present invention has excellent mechanical properties and is suitable for a starting material for producing a silicone-based polymer material.

Brief Description of Drawings

Fig. 1 is a schematic diagram showing the structure of silicone-based polymer material C (a movable crosslinked structure).
Fig. 2 is a schematic diagram showing the structure of silicone-based polymer material C' (a movable crosslinked structure).
Fig. 3 is a schematic diagram showing the structure of silicone-based polymer material D.
Fig. 4 is a reaction scheme for producing the silicone-based polymer compound (H) of Example 1-1.
Fig. 5 is a reaction scheme for producing the silicone-based polymer compound (H) of Example 3-1.
Fig. 6 is a reaction scheme for producing the silicone-based polymer compound (H) of Example 4-1.
Fig. 7 is a reaction scheme for producing the silicone-based polymer compound (HG) of Example 7.
Fig. 8 is a reaction scheme for producing the polymer material C of Example 8.
Fig. 9 is a reaction scheme for producing the polymer material D of Example 9.
Fig. 10 is a reaction scheme for producing the polymer material of Comparative Example 1-1.
Fig. 11 is a reaction scheme for producing the polymer material of Example 10-1.
Fig. 12 shows tensile test results (stroke-test force curves) of polymer materials C' obtained in Examples 10-1 and 10-2.
Fig. 13 shows tensile test results (stroke-test force curves) of polymer materials C' obtained in Examples 11-1 to 11-3.
Fig. 14 shows tensile test results (stroke-test force curves) of the polymer material C' obtained in Example 12-1.
Fig. 15 is a reaction scheme for producing the polymer material of Example 13-1.
Fig. 16 shows tensile test results (stroke-test force curves) of the polymer material C' obtained in Example 13-1 and the polymer material obtained in Comparative Example 13-1.
Fig. 17 is a reaction scheme for producing the polymer material of Example 14-1.
Fig. 18 shows tensile test results (stroke-test force curves) of the polymer material C' obtained in Example 14-1 and the polymer material obtained in Comparative Example 14-1.
Fig. 19 shows a reaction scheme for producing the polymer material of Example 15-1.
Fig. 20 shows tensile test results (stroke-test force curves) of the polymer materials obtained in Examples 16-1 to 16-3.
Fig. 21 is photographs showing transparency test results of the polymer materials obtained in Examples 16-1 to 16-3 and Comparative Example 16-1.
Fig. 22 shows tensile test results (stroke-test force curves) of the polymer materials obtained in Examples 17-1 to 17-5.

Description of Embodiments

The following describes embodiments of the present invention in detail. In the present specification, the terms "comprise," "contain," and "include" include the concepts of comprising, containing, consisting essentially of, and consisting of.

1. Silicone-based Polymer Compound

The silicone-based polymer compound according to the present invention has a polysiloxane backbone as the main chain. In particular, the silicone-based polymer compound according to the present invention encompasses the following three types: a silicone-based polymer compound (H), a silicone-based polymer compound (G), and a silicone-based polymer compound (HG).
The silicone-based polymer compound (H) has a polysiloxane backbone as the main chain, and the polysiloxane backbone has at least one host group in side chains. In the silicone-based polymer compound (H), the host group is a monovalent group formed by removing one hydrogen atom or one hydroxy group from a cyclodextrin or a cyclodextrin derivative.
The silicone-based polymer compound (G) has a polysiloxane backbone as the main chain, and the polysiloxane backbone has at least one guest group in side chains. In the silicone-based polymer compound (G), the guest group is includable in a cyclodextrin or a cyclodextrin derivative.
The silicone-based polymer compound (HG) has a polysiloxane backbone as the main chain, and the polysiloxane backbone has at least one host group in some side chains and at least one guest group in some other side chains. In the silicone-based polymer compound (HG), the host group is a monovalent group formed by removing one hydrogen atom or one hydroxy group from a cyclodextrin or a cyclodextrin derivative, and the guest group is a group includable in the cyclodextrin or cyclodextrin derivative.

In both the silicone-based polymer compound (H) and the silicone-based polymer compound (HG), the polysiloxane backbone has at least one host group in side chains; thus, the structural units that form the polysiloxane backbone of these polymer compounds include at least a siloxane unit having a host group.

In both the silicone-based polymer compound (G) and the silicone-based polymer compound (HG), the polysiloxane backbone has at least one guest group in side chains; thus, the structural units that form the polysiloxane backbone of these polymer compounds include at least a siloxane unit having a guest group.

First, a siloxane unit having the host group and a siloxane unit having the guest group are explained.

Siloxane Unit Having Host Group

A siloxane unit having a host group is a structural unit having a structure in which the main chain includes a siloxane bond, and a host group is directly or indirectly covalently bonded to a side chain.

As described above, the host group is a group formed by removing one hydrogen atom or one hydroxy group from a cyclodextrin or a cyclodextrin derivative. The host group is preferably a group formed by removing one hydrogen atom or one hydroxy group from a cyclodextrin derivative. The host group is not limited to a monovalent group, and may be, for example, a divalent group. A polymerizable monomer unit having a host group may contain only one host group or two or more host groups.

The cyclodextrin derivative preferably has, for example, a structure in which at least one hydroxy group among the hydroxy groups of a cyclodextrin has its hydrogen atom replaced with a hydrophobic group. Specifically, a cyclodextrin derivative refers to a molecule with a structure in which a cyclodextrin molecule is substituted with another hydrophobic organic group. However, the cyclodextrin derivative has at least one hydrogen atom or at least one hydroxy group, and preferably has at least one hydroxy group.

The hydrophobic group preferably has a structure substituted with at least one group selected from the group consisting of a hydrocarbon group, an acyl group, and -CONHR wherein R represents a methyl group or an ethyl group. In the present specification, the "at least one group selected from the group consisting of a hydrocarbon group, an acyl group, and -CONHR wherein R represents a methyl group or an ethyl group" may be referred below to as "a hydrocarbon group etc." for convenience.

Just to note, "cyclodextrin" in the present specification refers to at least one selected from the group consisting of $\alpha$-cyclodextrin, $\beta$-cyclodextrin, and $\gamma$-cyclodextrin. Thus, the cyclodextrin derivative is at least one selected from the group consisting of an $\alpha$-cyclodextrin derivative, a $\beta$-cyclodextrin derivative, and a $\gamma$-cyclodextrin derivative.

The host group is a monovalent or higher-valent group formed by removing one hydrogen atom or one hydroxy group from a cyclodextrin derivative. The hydrogen atom or hydroxy group to be removed from a cyclodextrin derivative may be at any position of the cyclodextrin or cyclodextrin derivative.

If the total number of hydroxy groups in a single molecule of a cyclodextrin is N, N of $\alpha$-cyclodextrin is 18, N of $\beta$-cyclodextrin is 21, and N of $\gamma$-cyclodextrin is 24.

If the host group is a monovalent group formed by removing one hydroxy group from a cyclodextrin derivative, the cyclodextrin derivative is formed such that the hydrogen atoms of hydroxy groups at a maximum number N-1 per cyclodextrin molecule are replaced with a hydrocarbon group etc. If the host group is a monovalent group formed by removing one hydrogen atom from a cyclodextrin derivative, the hydrogen atoms of hydroxy groups at a maximum number N per cyclodextrin molecule of the cyclodextrin derivative can be replaced with a hydrocarbon group etc.

The host group preferably has a structure in which the hydrogen atoms of at least 70% of the total number of hydroxy groups per cyclodextrin molecule are replaced with a hydrocarbon group etc. The host group more preferably has a structure in which the hydrogen atoms of at least 80% of the total number of hydroxy groups per cyclodextrin molecule are replaced with a hydrocarbon group etc., and particularly preferably has a structure in which the hydrogen atoms of at least 90% of the total number of hydroxy groups per cyclodextrin molecule are replaced with a hydrocarbon group etc.

The host group preferably has a structure in which the hydrogen atoms of at least 13 hydroxy groups out of the total number of hydroxy groups per molecule of $\alpha$-cyclodextrin are replaced with a hydrocarbon group etc. The host group more preferably has a structure in which the hydrogen atoms of at least 15 hydroxy groups out of the total number of hydroxy groups per molecule of $\alpha$-cyclodextrin are replaced with a hydrocarbon group etc., and particularly preferably has a structure in which the hydrogen atoms of at least 17 hydroxy groups out of the total number of hydroxy groups per molecule of $\alpha$-cyclodextrin are replaced with a hydrocarbon group etc.

The host group preferably has a structure in which the hydrogen atoms of at least 15 hydroxy groups out of the total number of hydroxy groups per molecule of $\beta$-cyclodextrin are replaced with a hydrocarbon group etc. The host

group more preferably has a structure in which the hydrogen atoms of at least 17 hydroxy groups out of the total number of hydroxy groups per molecule of β-cyclodextrin are replaced with a hydrocarbon group etc., and particularly preferably has a structure in which the hydrogen atoms of at least 19 hydroxy groups out of the total number of hydroxy groups per molecule of β-cyclodextrin are replaced with a hydrocarbon group etc.

The host group preferably has a structure in which the hydrogen atoms of at least 17 hydroxy groups out of the total number of hydroxy groups per molecule of γ-cyclodextrin are replaced with a hydrocarbon group etc. The host group more preferably has a structure in which the hydrogen atoms of at least 19 hydroxy groups out of the total number of hydroxy groups per molecule of γ-cyclodextrin are replaced with a hydrocarbon group etc., and particularly preferably has a structure in which the hydrogen atoms of at least 21 hydroxy groups out of the total number of hydroxy groups per molecule of γ-cyclodextrin are replaced with a hydrocarbon group etc.

For cyclodextrin derivatives, the hydrocarbon group can be of any type. Examples of hydrocarbon groups include an alkyl group, an alkenyl group, and an alkynyl group.

The number of carbon atoms of the hydrocarbon group is not particularly limited, and is preferably, for example, 1 to 4.

Specific examples of hydrocarbon groups having 1 to 4 carbon atoms include a methyl group, an ethyl group, an n-propyl group, an isopropyl group, and a butyl group. When the hydrocarbon group is a propyl group or a butyl group, the hydrocarbon group may be linear or branched.

In the cyclodextrin derivatives, the acyl group may be, for example, an acetyl group, a propionyl group, or a formyl group. From the viewpoint of ease of forming host-guest interaction, ease of allowing another polymer chain to penetrate the ring of the host group, or ease of obtaining a polymer material excellent in toughness and strength, the acyl group is preferably an acetyl group.

In the cyclodextrin derivatives, -CONHR wherein R represents a methyl group or an ethyl group is a methyl carbamate group or an ethyl carbamate group. From the viewpoint of ease of forming host-guest interaction, ease of allowing another polymer chain to penetrate through the ring of the host group, or ease of obtaining a polymer material excellent in toughness and strength, -CONHR is preferably an ethyl carbamate group.

In the cyclodextrin derivatives, the hydrocarbon group etc. is preferably a $C_{1-4}$ alkyl group or acyl group, preferably a methyl group or an acyl group, more preferably a methyl group, an acetyl group, or a propionyl group, and particularly preferably a methyl group or an acetyl group.

The siloxane unit having a host group may have any structure as long as the siloxane unit has a siloxane bond and a host group. For example, the siloxane unit having a host group is a structural unit represented by the following formula (1.1).

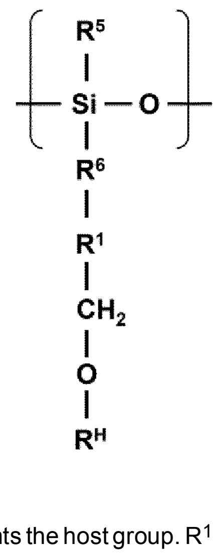

(1. 1)

In formula (1.1), $R^H$ represents the host group. $R^1$ represents a divalent group formed by removing one hydrogen atom from a monovalent group selected from the group consisting of a hydroxy group, a thiol group, an alkoxy group optionally having at least one substituent, a thioalkoxy group optionally having at least one substituent, an alkyl group optionally having at least one substituent, an amino group optionally having one substituent, an amide group optionally having one substituent, an aldehyde group, and a carboxy group. $R^5$ represents an optionally substituted, linear or branched $C_{1-10}$ alkyl group, or an optionally substituted $C_{6-20}$ aryl group. $R^6$ represents an alkylene group optionally having an intervening heteroatom.

Alternatively, the siloxane unit having a host group can be a structural unit represented by the following formula (1.2) .

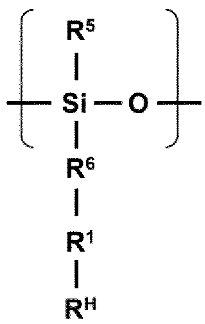

(1. 2)

In formula (1.2), $R^H$, $R^1$, $R^5$, and $R^6$ are respectively the same as $R^H$, $R^1$, $R^5$, and $R^6$ in formula (1.1) .

In formula (1.1) and formula (1.2), $R^5$ is preferably a $C_{1-4}$ alkyl group, and particularly preferably a $C_1$ or $C_2$ alkyl group. Specifically, examples of alkyl groups include a methyl group, an ethyl group, an n-propyl group, an isopropyl group, an n-butyl group, a sec-butyl group, a tert-butyl group, an n-pentyl group, an n-hexyl group, an n-heptyl group, an n-octyl group, an n-nonyl group, and an n-decyl group. The alkyl group is preferably a methyl group, an ethyl group, an n-propyl group, or an isopropyl group, and particularly preferably a methyl group.

When $R^5$ has a substituent, the substituent can be a hydroxy group, an alkoxy group, an ester group, a cyano group, a nitro group, a sulfo group, a carboxy group, an aryl group, a halogen atom (e.g., a fluorine atom, a chlorine atom, a bromine atom, an iodine atom), etc.

In formula (1.1) and formula (1.2), the substituent in $R^1$ can be a $C_{1-20}$ alkyl group, a $C_{2-20}$ alkenyl group, a $C_{2-20}$ alkynyl group, a halogen atom, a hydroxy group, a carboxy group, a nitro group, a sulfo group, a carbonyl group, an aryl group, a cyano group, etc.

In formula (1.1) and formula (1.2), when $R^1$ is a divalent group formed by removing one hydrogen atom from an amino group optionally having one substituent, the nitrogen atom of the amino group can bond with $R^6$.

In formula (1.1) and formula (1.2), when $R^1$ is a divalent group formed by removing one hydrogen atom from an amide group optionally having one substituent, the carbon atom of the amide group can bond with $R^6$.

In formula (1.1) and formula (1.2), when $R^1$ is a divalent group formed by removing one hydrogen atom from an aldehyde group, the carbon atom of the aldehyde group can bond with $R^6$.

In formula (1.1) and formula (1.2), when $R^1$ is a divalent group formed by removing one hydrogen atom from a carboxy group, the carbon atom of the carboxy group can bond with $R^6$.

In formula (1.1) and formula (1.2), $R^6$ is an alkylene group optionally having an intervening heteroatom. The number of carbon atoms of the alkylene group is not particularly limited, and may be, for example, 1 to 10. In $R^6$, the number of carbon atoms of alkylene is preferably 1 to 8, and more preferably 2 to 6.

$R^6$ may be an alkylene group having an intervening heteroatom. In this case, $R^6$ can be an alkylene group having a thioether bond; for example, $R^6$ can be a $-(CH_2)_{m1}-S-(CH_2)_{m2}-$ bond. In this formula, m1 and m2 are the same or different, and may be 1 to 10, preferably 1 to 8, and more preferably 1 to 5.

When $R^6$ is an alkylene group having an intervening sulfur atom, the silicone-based polymer compound has a thioether bond between Si in the polysiloxane backbone and the host group.

Siloxane Unit Having Guest Group

A siloxane unit having a guest group is a structural unit having a structure in which the main chain includes a siloxane bond, and a guest group is directly or indirectly covalently bonded to a side chain.

The guest group refers to a group includable in a cyclodextrin or a cyclodextrin derivative. Specifically, the guest group can be of any type as long as the guest group can have host-guest interaction with the host group, in particular, as long as the guest group is includable in the host group. The guest group is not limited to a monovalent group, and may be, for example, a divalent group. The siloxane unit having a guest group may have only one guest group, or two or more guest groups.

The guest group can be a linear or branched $C_{3-30}$ hydrocarbon group, a cycloalkyl group, a heteroaryl group, an organometallic complex, etc., and these may have one or more substituents. The substituents are the same as those described above, such as a halogen atom (e.g., fluorine, chlorine, and bromine), a hydroxy group, a carboxy group, an ester group, an amide group, and an optionally protected hydroxy group.

More specific guest groups include a $C_{4-18}$ chain or cyclic alkyl group, and a group derived from a polycyclic aromatic hydrocarbon. The $C_{4-18}$ chain alkyl group may be linear or branched. The cyclic alkyl group may have a structure like a basket. The polycyclic aromatic hydrocarbon may be, for example, a n-conjugated compound formed by at least

two aromatic rings, specifically those such as naphthalene, anthracene, tetracene, pentacene, benzopyrene, chrysene, pyrene, and triphenylene.

Examples of the guest group also include a monovalent group formed by removing one atom (e.g., a hydrogen atom) from a guest molecule, such as at least one member selected from the group consisting of alcohol derivatives; aryl compounds; carboxylic acid derivatives; amino derivatives; azobenzene derivatives with cyclic alkyl or phenyl; cinnamic acid derivatives; aromatic compounds and alcohol derivatives thereof; amine derivatives; ferrocene derivatives; azobenzene; naphthalene derivatives; anthracene derivatives; pyrene derivatives; perylene derivatives; clusters composed of carbon atoms, such as fullerenes; and dansyl compounds.

Further specific examples of the guest group include a t-butyl group, an n-octyl group, an n-dodecyl group, an isobornyl group, an adamantyl group, a pyrene-derived group, and these groups with the substituents described above.

The siloxane unit having a guest group can be of any structure as long as the siloxane unit has a siloxane bond and a guest group. For example, the siloxane unit having a guest group can be a structural unit represented by the following formula (2.1), a structural unit represented by the following formula (2.2), or a structural unit represented by the following formula (2.3) .

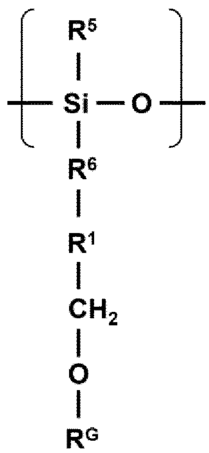

(2. 1)

In formula (2.1), $R^G$ represents the guest group. $R^1$, $R^5$, and $R^6$ are respectively the same as $R^1$, $R^5$, and $R^6$ in formula (1.1) .

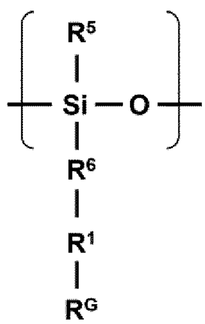

(2. 2)

In formula (2.2), $R^G$, $R^1$, $R^5$, and $R^6$ are respectively the same as $R^G$, $R^1$, $R^5$, and $R^6$ in formula (2.1) .

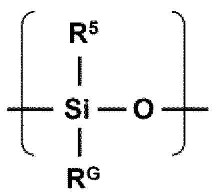

(2. 3)

In formula (2.3), $R^G$ and $R^5$ are respectively the same as $R^G$, and $R^5$ in formula (2.1) .

In formula (2.1), formula (2.2), and formula (2.3), $R^5$ is preferably a $C_{1-4}$ alkyl group, and particularly preferably a $C_1$ or $C_2$ alkyl group. Specifically, examples of alkyl groups include a methyl group, an ethyl group, an n-propyl group, an isopropyl group, an n-butyl group, a sec-butyl group, a tert-butyl group, an n-pentyl group, an n-hexyl group, an n-heptyl group, an n-octyl group, an n-nonyl group, and an n-decyl group. The alkyl group is preferably a methyl group, an ethyl group, an n-propyl group, or an isopropyl group, and particularly preferably a methyl group.

When $R^5$ has a substituent, the substituent can be a hydroxy group, an alkoxy group, an ester group, a cyano group, a nitro group, a sulfo group, a carboxy group, an aryl group, a halogen atom (e.g., a fluorine atom, a chlorine atom, a bromine atom, an iodine atom), etc.

In formula (2.1) and formula (2.2), when $R^1$ is a divalent group formed by removing one hydrogen atom from an amino group optionally having one substituent, the nitrogen atom of the amino group can bond with $R^6$.

In formula (2.1) and formula (2.2), when $R^1$ is a divalent group formed by removing one hydrogen atom from an amide group optionally having one substituent, the carbon atom of the amide group can bond with $R^6$.

In formula (2.1) and formula (2.2), when $R^1$ is a divalent group formed by removing one hydrogen atom from an aldehyde group, the carbon atom of the aldehyde group can bond with $R^6$.

In formula (2.1) and formula (2.2), when $R^1$ is a divalent group formed by removing one hydrogen atom from a carboxy group, the carbon atom of the carboxy group can bond with $R^6$.

In formula (2.1) and formula (2.2), the number of carbon atoms of the alkylene group of $R^6$ is preferably 1 to 8, and more preferably 2 to 6. $R^6$ may be an alkylene group having an intervening heteroatom. In this case, $R^6$ can be an alkylene group having a thioether bond; for example, $R^6$ can be a $-(CH_2)_{m1}-S-(CH_2)_{m2}-$ bond. In this formula, m1 and m2 are the same or different, and may be 1 to 10, preferably 1 to 8, and more preferably 1 to 5.

In formula (2.1) and formula (2.2), when $R^6$ is an alkylene group having an intervening sulfur atom, the silicone-based polymer compound has a thioether bond between Si in the polysiloxane backbone and the host group.

Other Siloxane Units

The silicone-based polymer compound according to the present invention may have one or more siloxane units other than the siloxane unit having a host group and the siloxane unit having a guest group. The silicone-based polymer compound may contain, as another siloxane unit, for example, a constituent unit represented by the following formula (3.1).

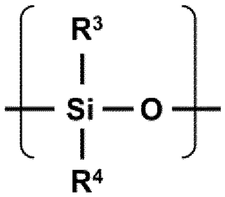

(3. 1)

In formula (3.1), $R^3$ and $R^4$ may be the same or different, and represent a hydrogen atom, an optionally substituted, linear or branched $C_{1-10}$ alkyl group, or an optionally substituted $C_{6-20}$ aryl group.

In formula (3.1), the linear or branched $C_{1-10}$ alkyl group preferably has 1 to 4 carbon atoms, and particularly preferably 1 or 2 carbon atoms. Specifically, examples of alkyl groups include a methyl group, an ethyl group, an n-propyl group, an isopropyl group, an n-butyl group, a sec-butyl group, a tert-butyl group, an n-pentyl group, an n-hexyl group, an n-heptyl group, an n-octyl group, an n-nonyl group, and an n-decyl group.

In formula (3.1), when the linear or branched $C_{1-10}$ alkyl group is substituted, the number of substituents may be one, or two or more. In this case, examples of substituents include a hydroxy group, an alkoxy group, an ester group, a cyano group, a nitro group, a sulfo group, a carboxy group, an aryl group, and a halogen atom (e.g., a fluorine atom, a chlorine atom, a bromine atom, an iodine atom).

In formula (3.1), the $C_{6-20}$ aryl group may be, for example, a phenyl group, a naphthyl group, or a tetrahydronaphthyl group. When the aryl group is substituted, the number of substituents may be one, or two or more. In this case, examples of substituents include a hydroxy group, an alkoxy group, an ester group, a cyano group, a nitro group, a sulfo group, a carboxy group, an aryl group, and a halogen atom (e.g., a fluorine atom, a chlorine atom, a bromine atom, an iodine atom).

In formula (3.1), $R^3$ and $R^4$ may be the same or different. In formula (3.1), $R^3$ and $R^4$ are both preferably a methyl group, an ethyl group, an n-propyl group, or an isopropyl group, and particularly preferably a methyl group. When $R^3$ and $R^4$ are both a methyl group, the polysiloxane backbone contains polydimethylsiloxane.

The silicone-based polymer compound according to the present invention may contain a constituent unit represented by the following formula (3.2), together with the constituent unit represented by formula (3.1) or instead of the constituent unit represented by formula (3.1).

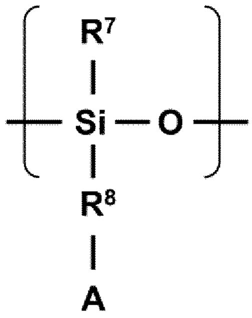

(3. 2)

In formula (3.2), $R^7$ represents a hydrogen atom, an optionally substituted, linear or branched $C_{1-10}$ alkyl group, or an optionally substituted $C_{6-20}$ aryl group. In formula (3.2), $R^8$ represents an alkylene group that may have an intervening heteroatom. A represents a hydrogen atom, a thiol group, a hydroxy group, or an amino group.

In formula (3.2), $R^7$ is preferably a methyl group, an ethyl group, an n-propyl group, or an isopropyl group, and particularly preferably a methyl group.

In formula (3.2), $R^8$ represents an alkylene group that may have an intervening heteroatom. The number of carbon atoms of the alkylene group is not particularly limited and may be, for example, 1 to 10. In $R^8$, alkylene preferably has 1 to 8 carbon atoms, and more preferably 2 to 6 carbon atoms.

$R^8$ may be an alkylene group having an intervening heteroatom. In this case, $R^8$ can be an alkylene group having a thioether bond; for example, $R^8$ can be a $-(CH_2)_{m1}-S-(CH_2)_{m2}-$ bond. In this formula, m1 and m2 are the same or different, and may be 1 to 10, preferably 1 to 8, and more preferably 1 to 5.

When the silicone-based polymer compound according to the present invention contains the constituent unit represented by formula (3.2) together with the constituent unit represented by formula (3.1), the silicone-based polymer compound exhibits improved mechanical properties, in particular in both Young's modulus and fracture energy, and further tends to have increased transparency; in particular, when $R^8$ of the constituent unit represented by formula (3.2) is an alkylene group having an intervening heteroatom, the silicone-based polymer compound exhibits a further increase in both Young's modulus and fracture energy, and particularly tends to have increased transparency.

Additionally, when the silicone-based polymer compound according to the present invention contains the constituent unit represented by formula (3.2) with A being a thiol group, some or all of the thiol groups may be protected by a hydrocarbon group (i.e., the hydrogen atom of the thiol group may be replaced with another group). In this case, the silicone-based polymer compound and a polymer material formed from the silicone-based polymer compound exhibit further improved mechanical properties. The hydrocarbon group can be, for example, a $C_{1-10}$ alkyl group or an alkenyl group, and preferably a $C_{3-8}$ alkyl group.

The following describes the structure of the silicone-based polymer compound (H), silicone-based polymer compound (G), and silicone-based polymer compound (HG).

Silicone-based Polymer Compound (H)

The silicone-based polymer compound (H) contains at least the siloxane unit having a host group in the structural units. In an embodiment, the silicone-based polymer compound (H) contains the siloxane unit having a host group and one or more other siloxane units as described above. A specific example of the silicone-based polymer compound (H) is a silicone-based polymer compound containing the structural unit represented by formula (1.1) and/or the structural unit represented by formula (1.2), optionally with either the structural unit represented by formula (3.1) or the structural unit represented by formula (3.2), or both. The silicone-based polymer compound (H) does not contain the structural unit represented by formula (2.1) and the structural unit represented by formula (2.2) (i.e., siloxane units having a guest group).

The content of the siloxane units having a host group in all of the structural units of the silicone-based polymer compound (H) is, for example, 0.1 mol% or more and 30 mol% or less. From the viewpoint of ease of forming a polymer material with further improved mechanical properties, the content of the siloxane units having a host group in all of the structural units of the silicone-based polymer compound (H) is preferably 0.2 mol% or more, more preferably 0.5 mol% or more, still more preferably 0.8 mol% or more, and particularly preferably 1 mol% or more. From the viewpoint of ease of forming a polymer material with further improved mechanical properties, the content of the siloxane units having a

host group in all of the structural units of the silicone-based polymer compound (H) is also preferably 20 mol% or less, more preferably 15 mol% or less, still more preferably 10 mol% or less, and particularly preferably 5 mol% or less.

The content of the other siloxane units in all of the structural units of the silicone-based polymer compound (H) is, for example, 70 mol% or more and 99.9 mol% or less. From the viewpoint of ease of forming a polymer material with further improved mechanical properties, the content of the other siloxane units in all of the structural units of the silicone-based polymer compound (H) is preferably 80 mol% or more, more preferably 85 mol% or more, still more preferably 90 mol% or more, and particularly preferably 95 mol% or more. From the viewpoint of ease of forming a polymer material with further improved mechanical properties, the content of the other siloxane units in all of the structural units of the silicone-based polymer compound (H) is also preferably 99.8 mol% or less, more preferably 99.5 mol% or less, still more preferably 99.2 mol% or less, and particularly preferably 99 mol% or less.

When the silicone-based polymer compound (H) contains the structural unit represented by formula (3.1) as another siloxane unit, the content of the structural unit represented by formula (3.1) in all of the structural units of the silicone-based polymer compound (H) is preferably 80 mol% or more, more preferably 85 mol% or more, still more preferably 90 mol% or more, and particularly preferably 95 mol% or more. When the silicone-based polymer compound (H) contains the structural unit represented by formula (3.1) as another siloxane unit, the content of the structural unit represented by formula (3.1) in all of the structural units of the silicone-based polymer compound (H) is preferably 99.8 mol% or less, more preferably 99.5 mol% or less, still more preferably 99.2 mol% or less, and particularly preferably 99 mol% or less.

When the silicone-based polymer compound (H) contains the structural unit represented by formula (3.2) as another siloxane unit, the content of the structural unit represented by formula (3.2) in all of the structural units of the silicone-based polymer compound (H) is preferably 0.2 mol% or more, more preferably 0.5 mol% or more, still more preferably 0.8 mol% or more, and particularly preferably 1 mol% or more. When the silicone-based polymer compound (H) contains the structural unit represented by formula (3.1) as another siloxane unit, the content of the structural unit represented by formula (3.1) in all of the structural units of the silicone-based polymer compound (H) is preferably 20 mol% or less, more preferably 15 mol% or less, still more preferably 10 mol% or less, and particularly preferably 5 mol% or less.

When the silicone-based polymer compound (H) contains the constituent unit represented by formula (3.2), the silicone-based polymer compound (H) exhibits improved mechanical properties (in particular, both Young's modulus and fracture energy) and further tends to have increased transparency; in particular, when $R^8$ of the constituent unit represented by formula (3.2) is an alkylene group having an intervening heteroatom, the silicone-based polymer compound (H) exhibits a further increase in mechanical properties (in particular, both Young's modulus and fracture energy), and particularly tends to have increased transparency.

The silicone-based polymer compound (H) may contain a structural unit ("structural unit S" below) other than the constituent units represented by formula (1.1), formula (1.2), formula (3.1), and formula (3.2). The content of the structural unit S in all of the structural units of the silicone-based polymer compound (H) is 5 mol% or less, preferably 1 mol% or less, and more preferably 0.1 mol% or less, and may be 0 mol%.

Silicone-based Polymer Compound (G)

The silicone-based polymer compound (G) contains at least the siloxane unit having a guest group in the structural units. In an embodiment, the silicone-based polymer compound (G) contains the siloxane unit having a guest group and one or more other siloxane units as described above. A specific example of the silicone-based polymer compound (G) is a silicone-based polymer compound containing at least one selected from the group consisting of the structural unit represented by formula (2.1), the structural unit represented by formula (2.2), and the structural unit represented by formula (2.3), optionally with either the structural unit represented by formula (3.1) or the structural unit represented by formula (3.2), or both. The silicone-based polymer compound (G) does not contain the structural unit represented by formula (1.1) and the structural unit represented by formula (1.2) (i.e., siloxane units having a host group).

The content of the siloxane unit having a guest group in all of the structural units of the silicone-based polymer compound (G) is, for example, 0.1 mol% or more and 30 mol% or less. From the viewpoint of ease of forming a polymer material with further improved mechanical properties, the content of the siloxane unit having a guest group in all of the structural units of the silicone-based polymer compound (G) is preferably 0.2 mol% or more, more preferably 0.5 mol% or more, still more preferably 0.8 mol% or more, and particularly preferably 1 mol% or more. From the viewpoint of ease of forming a polymer material with further improved mechanical properties, the content of the siloxane unit having a guest group in all of the structural units of the silicone-based polymer compound (G) is preferably 20 mol% or less, more preferably 15 mol% or less, still more preferably 10 mol% or less, and particularly preferably 5 mol% or less.

The content of the other siloxane units in all of the structural units of the silicone-based polymer compound (G) is, for example, 70 mol% or more and 99.9 mol% or less. From the viewpoint of ease of forming a polymer material with further improved mechanical properties, the content of the other siloxane units in all of the structural units of the silicone-based polymer compound (G) is preferably 80 mol% or more, more preferably 85 mol% or more, still more preferably 90 mol% or more, and particularly preferably 95 mol% or more. From the viewpoint of ease of forming a polymer material with further improved mechanical properties, the content of the other siloxane units in all of the structural units of the silicone-based polymer compound (G) is preferably 99.8 mol% or less, more preferably 99.5 mol% or less, still more preferably 99.2 mol% or less, and particularly preferably 99 mol% or less.

When the silicone-based polymer compound (G) contains the structural unit represented by formula (3.1) as another siloxane unit, the content of the structural unit represented by formula (3.1) in all of the structural units of the silicone-based polymer compound (G) is preferably 80 mol% or more, more preferably 85 mol% or more, still more preferably 90 mol% or more, and particularly preferably 95 mol% or more. When the silicone-based polymer compound (G) contains the structural unit represented by formula (3.1) as another siloxane unit, the content of the structural unit represented by formula (3.1) in all of the structural units of the silicone-based polymer compound (G) is preferably 99.8 mol% or less, more preferably 99.5 mol% or less, still more preferably 99.2 mol% or less, and particularly preferably 99 mol% or less.

When the silicone-based polymer compound (G) contains the structural unit represented by formula (3.2) as another siloxane unit, the content of the structural unit represented by formula (3.2) in all of the structural units of the silicone-based polymer compound (G) is preferably 0.2 mol% or more, more preferably 0.5 mol% or more, still more preferably 0.8 mol% or more, and particularly preferably 1 mol% or more. When the silicone-based polymer compound (G) contains the structural unit represented by formula (3.2) as another siloxane unit, the content of the structural unit represented by formula (3.2) in all of the structural units of the silicone-based polymer compound (G) is preferably 20 mol% or less, more preferably 15 mol% or less, still more preferably 10 mol% or less, and particularly preferably 5 mol% or less.

The silicone-based polymer compound (G) may contain the structural unit S other than the constituent units represented by formula (2.1), formula (2.2), formula (2.3), formula (3.1), and formula (3.2). The content of the structural unit S in all of the structural units of the silicone-based polymer compound (G) is 5 mol% or less, preferably 1 mol% or less, and more preferably 0.1 mol% or less, and may be 0 mol%.

Silicone-based Polymer Compound (HG)

The silicone-based polymer compound (HG) may contain at least the siloxane unit having a host group and at least the siloxane unit having a guest group in the structural units. In an embodiment, the silicone-based polymer compound (HG) contains the siloxane unit having a host group, the siloxane unit having a guest group, and the other siloxane units described above. A specific example of the silicone-based polymer compound (HG) is a silicone-based polymer compound containing the structural unit represented by formula (1.1) and/or the structural unit represented by formula (1.2), and at least one selected from the group consisting of the structural unit represented by formula (2.1), the structural unit represented by formula (2.2), and the structural unit represented by formula (2.3), optionally with either the structural unit represented by formula (3.1) or the structural unit represented by formula (3.2), or both.

The content of the siloxane units having a host group in all of the structural units of the silicone-based polymer compound (HG) is, for example, 0.1 mol% or more and 30 mol% or less. From the viewpoint of ease of forming a polymer material with further improved mechanical properties, the content of the siloxane units having a host group in all of the structural units of the silicone-based polymer compound (HG) is preferably 0.2 mol% or more, more preferably 0.5 mol% or more, still more preferably 0.8 mol% or more, and particularly preferably 1 mol% or more. From the viewpoint of ease of forming a polymer material with further improved mechanical properties, the content of the siloxane units having a host group in all of the structural units of the silicone-based polymer compound (HG) is preferably 20 mol% or less, more preferably 15 mol% or less, still more preferably 10 mol% or less, and particularly preferably 5 mol% or less.

The content of the siloxane units having a guest group in all of the structural units of the silicone-based polymer compound (HG) is, for example, 0.1 mol% or more and 30 mol% or less. From the viewpoint of ease of forming a polymer material with further improved mechanical properties, the content of the siloxane units having a guest group in all of the structural units of the silicone-based polymer compound (HG) is preferably 0.2 mol% or more, more preferably 0.5 mol% or more, still more preferably 0.8 mol% or more, and particularly preferably 1 mol% or more. From the viewpoint of ease of forming a polymer material with further improved mechanical properties, the content of the siloxane units having a guest group in all of the structural units of the silicone-based polymer compound (HG) is preferably 20 mol% or less, more preferably 15 mol% or less, still more preferably 10 mol% or less, and particularly preferably 5 mol% or less.

The content of the other siloxane units in all of the structural units of the silicone-based polymer compound (HG) is, for example, 70 mol% or more and 99.9 mol% or less. From the viewpoint of ease of forming a polymer material with further improved mechanical properties, the content of the other siloxane units in all of the structural units of the silicone-based polymer compound (HG) is preferably 80 mol% or more, more preferably 85 mol% or more, still more preferably 90 mol% or more, and particularly preferably 95 mol% or more. From the viewpoint of ease of forming a polymer material with further improved mechanical properties, the content of the other siloxane units in all of the structural

units of the silicone-based polymer compound (HG) is preferably 99.8 mol% or less, more preferably 99.5 mol% or less, still more preferably 99.2 mol% or less, and particularly preferably 99 mol% or less.

When the silicone-based polymer compound (HG) contains the structural unit represented by formula (3.1) as another siloxane unit, the content of the structural unit represented by formula (3.1) in all of the structural units of the silicone-based polymer compound (HG) is preferably 80 mol% or more, more preferably 85 mol% or more, still more preferably 90 mol% or more, and particularly preferably 95 mol% or more. When the silicone-based polymer compound (HG) contains the structural unit represented by formula (3.1) as another siloxane unit, the content of the structural unit represented by formula (3.1) in all of the structural units of the silicone-based polymer compound (HG) is preferably 99.8 mol% or less, more preferably 99.5 mol% or less, still more preferably 99.2 mol% or less, and particularly preferably 99 mol% or less.

When the silicone-based polymer compound (HG) contains the structural unit represented by formula (3.2) as another siloxane unit, the content of the structural unit represented by formula (3.2) in all of the structural units of the silicone-based polymer compound (HG) is preferably 0.2 mol% or more, more preferably 0.5 mol% or more, still more preferably 0.8 mol% or more, and particularly preferably 1 mol% or more. When the silicone-based polymer compound (HG) contains the structural unit represented by formula (3.2) as another siloxane unit, the content of the structural unit represented by formula (3.2) in all of the structural units of the silicone-based polymer compound (HG) is preferably 20 mol% or less, more preferably 15 mol% or less, still more preferably 10 mol% or less, and particularly preferably 5 mol% or less.

The silicone-based polymer compound (HG) may contain the structural unit S other than the constituent units represented by formula (1.1), formula (1.2), formula (2.1), formula (2.2), formula (2.3), formula (3.1), and formula (3.2). The content of the structural unit S in all of the structural units of the silicone-based polymer compound (HG) is 5 mol% or less, preferably 1 mol% or less, more preferably 0.1 mol% or less, and may be 0 mol%.

Silicone-based Polymer Compound

The silicone-based polymer compound according to the present invention encompasses the silicone-based polymer compound (H), the silicone-based polymer compound (G), and the silicone-based polymer compound (HG). The silicone-based polymer compound may have a structure such as of a random polymer or a block polymer. For example, for ease of production, the silicone-based polymer compound is preferably a random polymer.

The mass average molecular weight of the silicone-based polymer compound is also not particularly limited, and is 1000 to 1000000, preferably 5000 to 800000, and more preferably 10000 to 600000. The "mass average molecular weight" refers to a standard substance (polystyrene)-equivalent number average molecular weight as measured by gel permeation chromatography (GPC).

The silicone-based polymer compound according to the present invention can form a variety of silicone-based polymer materials, described later. For example, the silicone-based polymer compound can form silicone-based polymer materials with a reversible crosslinked structure or silicone-based polymer materials with a movable crosslinked structure. The silicone-based polymer compound according to the present invention is also excellent in photohealing performance.

Method for Producing Silicone-based Polymer Compound

The method for producing the silicone-based polymer compound is not particularly limited, and the silicone-based polymer compound can be produced by various methods. For example, a host group and/or a guest group can be introduced into side chains of the polysiloxane backbone by reacting a polysiloxane with a host group-containing compound and/or a guest group-containing compound. The type of reaction is not particularly limited, and includes, for example, an addition reaction.

An embodiment of the method for producing the silicone-based polymer compound includes, for example, a production method comprising the following step A.

Step A: a step of reacting a polysiloxane compound with at least one compound containing an alkenyl group.

In step A, a polysiloxane compound having an -SH group and/or an -Si-H group in side chains can be used. The polysiloxane compound can undergo an addition reaction with the compound containing an alkenyl group. Thus, for example, when the compound containing an alkenyl group has a host group, the host group is covalently introduced into side chains of the polysiloxane backbone, and when the compound containing an alkenyl group has a guest group, the guest group is covalently introduced into side chains of the polysiloxane backbone.

The type of the polysiloxane compound used in step A is not limited as long as it has an -SH group and/or an -Si-H group. The polysiloxane compound used in step A may be, for example, a compound having a structural unit represented by formula (3.1) and a structural unit represented by formula (3.2). Hereinafter, the polysiloxane compound having a structural unit represented by formula (3.1) and a structural unit represented by formula (3.2) is referred to as "polysiloxane compound a."

When the polysiloxane compound a does not have an -SH group, for example, $R^3$ or $R^4$ in formula (3.1), or both, are hydrogen. When neither $R^3$ nor $R^4$ in formula (3.1) is hydrogen, $R^3$ and $R^4$ are the same or different, and each is preferably a methyl group, an ethyl group, an n-propyl group, or an isopropyl group, and particularly preferably a methyl group.

In the polysiloxane compound a, $R^7$ in formula (3.2) is preferably a methyl group, an ethyl group, an n-propyl group, or an isopropyl group, and particularly preferably a methyl group. When $R^8$ is an alkylene group having an intervening heteroatom, $R^8$ is, for example, an alkylene group or an alkylene group having a thioether bond, such as $-(CH_2)_{m1}-$ or $-(CH_2)_{m1}-S-(CH_2)_{m2}-$, wherein m1 and m2 are each a number from 1 to 10, preferably from 1 to 8, and more preferably from 1 to 5. m1 and m2 may be the same or different.

When the polysiloxane compound a does not have an -SH group, A in formula (3.2) is a group other than a thiol group, and when the polysiloxane compound a has an -SH group, and neither $R^3$ nor $R^4$ in formula (3.1) is hydrogen, A is a thiol group.

The content of the structural unit represented by formula (3.1) in all of the structural units of the polysiloxane compound a is, for example, 70 mol% or more, preferably 75 mol% or more, still more preferably 80 mol% or more, still even more preferably 85 mol% or more, and particularly preferably 90 mol% or more. The content of the structural unit represented by formula (3.1) in all of the structural units of the polysiloxane compound a is also, for example, 99.9 mol% or less, preferably 99 mol% or less, more preferably 98 mol% or less, still more preferably 96 mol% or less, and particularly preferably 95 mol% or less.

The content of the structural unit represented by formula (3.2) in all of the structural units of the polysiloxane compound a is, for example, 0.1 mol% or more, preferably 1 mol% or more, more preferably 2 mol% or more, still more preferably 4 mol% or more, and particularly preferably 5 mol% or more. The content of the structural unit represented by formula (3.2) in all of the structural units of the polysiloxane compound a is also, for example, 30 mol% or less, preferably 25 mol% or less, more preferably 20 mol% or less, still more preferably 15 mol% or less, and particularly preferably 10 mol% or less.

Examples of the compound containing an alkenyl group used in step A include an alkenyl group-containing compound having a host group and an alkenyl group-containing compound having a guest group. Specifically, when the silicone-based polymer compound (H) is produced, an alkenyl group-containing compound having a host group is used as the compound containing an alkenyl group; when the silicone-based polymer compound (G) is produced, an alkenyl group-containing compound having a guest group is used as the compound containing an alkenyl group; and when the silicone-based polymer compound (HG) is produced, both an alkenyl group-containing compound having a host group and an alkenyl group-containing compound having a guest group are used as the compound containing an alkenyl group.

In the compound containing an alkenyl group used in step A, the alkenyl group may be, for example, a vinyl group, an allyl group, or the like.

The types of alkenyl group-containing compound having a host group and alkenyl group-containing compound having a guest group are not particularly limited, and, for example, a wide range of known compounds can be used.

Specific examples of the alkenyl group-containing compound having a host group include a compound represented by the following formula (h1).

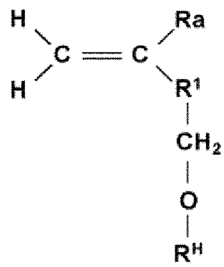

(h1)

In formula (h1), Ra represents a hydrogen atom or a methyl group, $R^H$ represents the host group described above, and $R^1$ is the same as $R^1$ in formula (1.1) .

Other specific examples of the alkenyl group-containing compound having a host group include a compound represented by the following formula (h2).

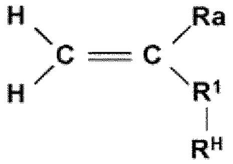

(h2)

In formula (h2), Ra, $R^H$, and $R^1$ are respectively the same as Ra, $R^H$, and $R^1$ in formula (h1) .

Specific examples of the alkenyl group-containing compound having a guest group include a compound represented by the following formula (g1).

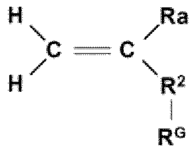

(g1)

In formula (g1), Ra represents a hydrogen atom or a methyl group, $R^G$ represents the guest group described above, and $R^2$ is the same as $R^1$ in formula (1.1). Specific examples of the alkenyl group-containing compound having a guest group include n-hexyl (meth)acrylate, n-octyl (meth)acrylate, n-dodecyl (meth)acrylate, adamantyl (meth)acrylate, hydroxyl adamantyl (meth)acrylate, 1-(meth)acrylamide adamantane, 2-ethyl-2-adamantyl (meth)acrylate, N-dodecyl (meth)acrylamide, t-butyl (meth)acrylate, 1-acrylamide adamantane, N-(1-adamantyl) (meth)acrylamide, N-benzyl (meth)acrylamide, N-1-naphthylmethyl (meth)acrylamide, ethoxylated O-phenylphenol acrylate, phenoxypolyethylene glycol acrylate, isostearyl acrylate, nonylphenol EO adduct acrylate, isobornyl (meth)acrylate, (meth)acrylate having a pyrene moiety, (meth)acrylamide having a pyrene moiety, and the like.

In the present specification, "(meth)acrylic" means acrylic or methacrylic, "(meth)acrylate" means acrylate or methacrylate, and "(meth)allyl" means allyl or metallyl.

The alkenyl group-containing compound having a host group and the alkenyl group-containing compound having a guest group can be produced by known methods or may be commercially available products.

In the reaction of step A, an alkenyl group-containing compound other than the alkenyl group-containing compound having a host group and the alkenyl group-containing compound having a guest group can also be used. The alkenyl group-containing compound other than the alkenyl group-containing compound having a host group and the alkenyl group-containing compound having a guest group is referred to as "alkenyl group-containing compound c."

The alkenyl group-containing compound c may be, for example, an optionally substituted $C_{2-10}$ alkenyl compound. Examples of substituents include a hydroxy group, an amino group, a carboxy group, and the like. In the alkenyl compound, the position of the carbon-carbon double bond is not particularly limited and can be, for example, an end of the alkenyl compound (e.g., 1,2-alkenyl compound). In this case, a substituent described above can be present at the opposite end. Specific examples of the alkenyl group-containing compound c include 1-pentene, 2-pentene, allyl alcohol, and the like. When 1-pentene is used, the mechanical properties of the polymer material are likely to improve.

In the reaction of step A, the polysiloxane compound is reacted with at least one compound containing an alkenyl group (the alkenyl group-containing compound having a host group and/or the alkenyl group-containing compound having a guest group). In this reaction, the alkenyl group-containing compound c is also used, if necessary. In this case, the resulting polymer is likely to have excellent mechanical properties (in particular, excellent Young's modulus and excellent fracture energy) and high transparency.

In the reaction of step A, the amount of the compound containing an alkenyl group (not including the alkenyl group-containing compound c) for use is not particularly limited, and may be 0.1 to 30 mol% relative to the polysiloxane compound. In the reaction of step A, the amount of the alkenyl group-containing compound c for use may be, for example, 50 to 150 mol% relative to the polysiloxane compound.

The reaction of step A can be performed in the presence of, for example, a photoinitiator. This facilitates the reaction between the polysiloxane compound and the compound containing an alkenyl group. Specifically, a reaction (addition reaction) between the -SH group and/or -Si-H group of the polysiloxane compound and the alkenyl group of the compound containing an alkenyl group easily occurs.

When a photoinitiator is used in the reaction of step A, the amount of the photoinitiator for use is not particularly limited, and may be, for example, 1 to 20 mol% relative to the polysiloxane compound.

The reaction of step A can be performed in various solvents. The type of solvent is not particularly limited. For example, a wide range of solvents conventionally used in an addition reaction of an alkenyl compound and a silyl group or an addition reaction of an alkenyl compound and a thiol group can be used. Examples of solvents include hydrocarbon-based solvents, such as benzene, toluene, and xylene; ketone-based solvents, such as acetone, methyl ethyl ketone,

and isophorone; alcohol-based solvents, such as tert-butyl alcohol, benzyl alcohol, phenoxyethanol, and phenylpropylene glycol; halogenated hydrocarbon-based solvents, such as methylene chloride and chloroform; ether-based solvents, such as 1,2-dimethoxyethane, tetrahydrofuran, 1,4-dioxane, and anisole; ester-based solvents, such as ethyl acetate, propyl acetate, ethyl carbitol acetate, and butyl carbitol acetate; and amide-based solvents, such as N,N-dimethylformamide and N,N-dimethylacetamide.

The reaction of step A can be performed, for example, by a method in which starting materials including the polysiloxane compound, the compound containing an alkenyl group, the alkenyl group-containing compound c, a photoinitiator, and a solvent are irradiated with active energy rays to allow a reaction to proceed, or by a method in which the starting materials are adjusted to a predetermined temperature to allow a reaction to proceed. Of these, it is preferable to use the method of irradiation with active energy rays because the reaction proceeds easily. Examples of active energy rays include ultraviolet rays, electron beams, visible light, X rays, ion beams, and the like. Of these, ultraviolet rays or electron beams are preferred, and ultraviolet rays are particularly preferred, in terms of versatility.

After the reaction of step A, starting materials (e.g., the polysiloxane compound, the compound containing an alkenyl group, and the alkenyl group-containing compound c) and the like can be further additionally added. In this case, it is preferable to add the alkenyl group-containing compound c. This allows the unreacted Si-H group or SH group in the polysiloxane compound to be consumed.

After the reaction of step A is completed, the desired silicone-based polymer compound can be obtained by an appropriate purification means.

## 2. Silicone-based Polymer Material

The silicone-based polymer material of the present invention encompasses the following silicone-based polymer material A, silicone-based polymer material B, silicone-based polymer material C, silicone-based polymer material C', and silicone-based polymer material D.

### Silicone-based Polymer Material A

The silicone-based polymer material A comprises the silicone-based polymer compound (H) and the silicone-based polymer compound (G), wherein the host group of the silicone-based polymer compound (H) includes the guest group of the silicone-based polymer compound (G).

Specifically, in the silicone-based polymer material A, the at least one host group of the silicone-based polymer compound (H) and the at least one guest group of the silicone-based polymer compound (G) form host-guest interaction. In short, in the silicone-based polymer material A, intermolecularly reversible host-guest interaction occurs, resulting in the formation of a reversible crosslinked structure.

In the silicone-based polymer material A, the combination of host and guest groups is not particularly limited, and any combination of the host and guest groups described above can be used. In particular, from the viewpoint of ease of improving the mechanical properties of the silicone-based polymer material A, when the host group is derived from $\alpha$-cyclodextrin or a derivative thereof, the guest group is preferably at least one member selected from the group consisting of an octyl group and a dodecyl group. For the same reason, when the host group is derived from $\beta$-cyclodextrin or a derivative thereof, the guest group is preferably at least one member selected from the group consisting of an adamantyl group and an isobornyl group; and when the host group is derived from $\gamma$-cyclodextrin or a derivative thereof, the guest group is preferably at least one member selected from the group consisting of an octyl group, a dodecyl group, a cyclododecyl group, and an adamantyl group.

The silicone-based polymer material A can also have self-healing properties due to the formation of intermolecular host-guest interaction. For example, even if the silicone-based polymer material A is, for example, cut, adhering the cut surfaces to each other allows host-guest interaction to be formed again at the adhered surfaces. This leads to the rejoining of the surfaces, resulting in self-healing.

In the silicone-based polymer material A, the content of the silicone-based polymer compound (H) and the silicone-based polymer compound (G) is not particularly limited. For example, from the viewpoint of facilitating host-guest interaction, the content of the silicone-based polymer compound (H) is 30 to 80 mass%, and preferably 40 to 60 mass%, based on the total mass of the silicone-based polymer compound (H) and the silicone-based polymer compound (G), and the amounts of the silicone-based polymer compound (H) and the silicone-based polymer compound (G) may be the same.

The silicone-based polymer material A may contain additives in addition to the silicone-based polymer compound (H) and the silicone-based polymer compound (G), or the silicone-based polymer material A may be formed only of the silicone-based polymer compound (H) and the silicone-based polymer compound (G).

The method for producing the silicone-based polymer material A is not particularly limited, and, for example, a wide range of known methods can be used. For example, the silicone-based polymer material A can be obtained by

mixing the silicone-based polymer compound (H) and the silicone-based polymer compound (G) by a known mixing means. A wide range of known mixing machines can be used as mixing means, and examples include mixing machines, such as a ball mill. The mixing may be done dry or wet. When the mixing is done wet, for example, a method in which a solution containing the silicone-based polymer compound (H) and the silicone-based polymer compound (G) is mixed with a conductive material can be used. The solvent of the solution is not particularly limited, and various organic solvents in which both the silicone-based polymer compound (H) and the silicone-based polymer compound (G) dissolve can be used.

Silicone-based Polymer Material B

The silicone-based polymer material B comprises the silicone-based polymer compound (HG), wherein the host group and the guest group are intermolecularly bound.

In the silicone-based polymer material B, since the silicone-based polymer compound (HG) contains at least one host group and at least one guest group, host-guest interaction can be formed between molecules of the silicone-based polymer compound (HG). Specifically, the at least one host group of the silicone-based polymer compound (HG) includes the at least one guest group of another silicone-based polymer compound (HG), thereby forming intermolecularly reversible host-guest interaction. Thus, a reversible crosslinked structure is formed in the silicone-based polymer material B, as in the silicone-based polymer material A.

Since the intermolecular host-guest interaction improves the mechanical properties of the silicone-based polymer material B, in particular both Young's modulus and fracture energy, the silicone-based polymer material B has excellent flexibility while being tough.

In the silicone-based polymer material B, the combination of host and guest groups is not particularly limited, and any combination of the host and guest groups described above can be used. In particular, from the viewpoint of ease of improving the mechanical properties of the silicone-based polymer material B, when the host group of the silicone-based polymer compound (HG) is derived from α-cyclodextrin or a derivative thereof, the guest group is preferably at least one member selected from the group consisting of an octyl group and a dodecyl group. For the same reason, when the host group of the silicone-based polymer compound (HG) is derived from β-cyclodextrin or a derivative thereof, the guest group is preferably at least one member selected from the group consisting of an adamantyl group and an isobornyl group; and when the host group of the silicone-based polymer compound (HG) is derived from γ-cyclodextrin or a derivative thereof, the guest group is preferably at least one member selected from the group consisting of an octyl group, a dodecyl group, a cyclododecyl group, and an adamantyl group.

The silicone-based polymer material B can also have self-healing properties due to the formation of intermolecular host-guest interaction. For example, even if the silicone-based polymer material B is, for example, cut, adhering the cut surfaces to each other allows host-guest interaction to be formed again at the adhered surfaces. This leads to the rejoining of the surfaces, resulting in self-healing.

The silicone-based polymer material B may contain additives in addition to the silicone-based polymer compound (HG), or the silicone-based polymer material B may be formed only of the silicone-based polymer compound (HG).

The method for producing the silicone-based polymer material B is not particularly limited. For example, a wide range of known methods can be used. For example, the silicone-based polymer material B can be produced using a solution of the silicone-based polymer compound (HG).

Silicone-based Polymer Material C

The silicone-based polymer material C comprises a crosslinked structure containing the silicone-based polymer compound (H), wherein the crosslinked structure has a structure in which the at least one host group of the silicone-based polymer compound (H) is penetrated by the main chain of another silicone-based polymer compound (H).

Fig. 1 schematically shows a structure in which the at least one host group of the silicone-based polymer compound (H) is penetrated by the main chain of another silicone-based polymer compound (H). Since the host group of the silicone-based polymer compound (H) is penetrated by the main chain of another silicone-based polymer compound (H), a crosslinked structure is formed, and the polymer chain penetrating the ring of the host group is slidable. That is, the silicone-based polymer compound (H) forms a crosslinked structure that is movable (movable crosslinked structure). This crosslinked structure can also be referred to as a "single cross network." The crosslinked structure improves the mechanical properties (in particular, both Young's modulus and fracture energy) of the silicone-based polymer compound (H), allowing it to have excellent flexibility while being tough. Since the silicone-based polymer compound (H) penetrating the host group also has a host group, this host group acts as a "stopper" and prevents falling off.

As shown in Fig. 1, the silicone-based polymer material C may further comprise a chain polymer compound (P1), wherein the chain polymer compound (P1) penetrates the network of the crosslinked structure. The network of the crosslinked structure as used herein means the movable crosslinked structure formed by penetrating the host group of

the silicone-based polymer compound (H) by the main chain of another silicone-based polymer compound (H) .

In the silicone-based polymer material C, since the chain polymer compound (P1) is present so as to penetrate the network of the crosslinked structure, the mechanical properties of the silicone-based polymer material C can be more easily improved.

The chain polymer compound (P1) is a polymer compound having no host group, and examples include polymers obtained by polymerizing various polymerizable monomers M. Examples of polymerizable monomers M include various (meth)acrylic ester-based monomers, such as alkyl (meth)acrylates, alkyl (meth)acrylate having a hydroxy group, and (meth)acrylic acid-based monomers having a carboxy group. Specific examples of polymerizable monomers M include (meth)acrylic acid, allylamine, and maleic anhydride; alkyl (meth)acrylates, such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, hexyl (meth)acrylate, cyclohexyl (meth)acrylate, and n-octyl (meth)acrylate; (meth)acrylamide or derivatives thereof, such as (meth)acrylamide, N,N-dimethyl (meth)acrylamide, N,N-diethyl acrylamide, N-isopropyl (meth)acrylamide, and N-hydroxymethyl (meth)acrylamide; hydroxy group-containing (meth)acrylic acid esters, such as hydroxymethyl (meth)acrylate, 2-hydroxyethyl (meth)acrylamide, and 2-hydroxyethyl (meth)acrylate; ethoxy-diethylene glycol (meth)acrylate, methoxy-triethylene glycol (meth)acrylate, methoxy-polyethylene glycol (meth)acrylate, and styrene.

The chain polymer compound (P1) is preferably a polymer of (meth)acrylic acid, a (meth)acrylic acid ester, or (meth)acrylamide or a derivative thereof, and more preferably a polymer containing an alkyl (meth)acrylate unit, such as methyl (meth)acrylate, ethyl (meth)acrylate, n-propyl (meth)acrylate, or isopropyl (meth)acrylate, from the viewpoint that the chain polymer compound (P1) is easily present in such a state that the chain polymer compound (P1) penetrates the network of the crosslinked structure. When the chain polymer compound (P1) has an aqueous bonding functional group, such as a hydroxy group or a carboxy group, the mechanical properties are likely to be improved by intermolecular hydrogen bonding; thus, it is particularly preferred that the chain polymer compound (P1) has an aqueous bonding functional group. From this viewpoint, the chain polymer compound (P1) is preferably a copolymer of an alkyl (meth)acrylate described above and a hydroxy group-containing (meth)acrylic ester described above, or the chain polymer compound (P1) may be a homopolymer of a hydroxy group-containing (meth)acrylic ester described above. When the chain polymer compound (P1) is a copolymer of an alkyl (meth)acrylate described above and a hydroxy group-containing (meth)acrylic ester described above, the content of the alkyl (meth)acrylate and the hydroxy group-containing (meth)acrylic ester is not particularly limited. For example, the content of the hydroxy group-containing (meth)acrylic ester is 5 to 80 mass%, and preferably 10 to 60 mass%.

Other examples of the chain polymer compound (P1) include polyaddition polymer compounds and polycondensation polymer compounds, such as polyurethane, as described later.

The mass average molecular weight (Mw) of the chain polymer compound (P1) is not particularly limited, and is, for example, 10000 to 2000000, and preferably 20000 to 1000000. The chain polymer compound (P1) may have a structure of, for example, a homopolymer or a random polymer. The chain polymer compound (P1) may be linear. The chain polymer compound (P1) may also have a branched structure or a crosslinked structure as long as the effects of the present invention are not impaired.

The content of the silicone-based polymer compound (H) and the chain polymer compound (P1) in the silicone-based polymer material C is not particularly limited. For example, from the viewpoint of ease of enhancing the mechanical properties, the content of the silicone-based polymer compound (H) is, for example, 10 mass% or more, preferably 20 mass% or more, more preferably 40 mass% or more, and still more preferably 50 mass% or more, based on the total mass of the silicone-based polymer compound (H) and the chain polymer compound (P1). From the viewpoint of ease of enhancing the mechanical properties, the content of the silicone-based polymer compound (H) may also be 90 mass% or less, preferably 80 mass% or less, and more preferably 70 mass% or less, based on the total mass of the silicone-based polymer compound (H) and the chain polymer compound (P1).

The silicone-based polymer material C may contain additives in addition to the silicone-based polymer compound (H) and the chain polymer compound (P1), or may be formed only of the silicone-based polymer compound (H) and the chain polymer compound (P1).

The method for producing the silicone-based polymer material C is not particularly limited, and, for example, a wide range of known methods can be used. For example, a solution in which the silicone-based polymer compound (H) is dissolved in a solvent is prepared, and in the process of drying the solvent, the at least one host group of the silicone-based polymer compound (H) can be penetrated by the main chain of another silicone-based polymer compound (H). This forms a crosslinked structure (the movable crosslinked structure described above), thereby obtaining the silicone-based polymer material C. Alternatively, when the polysiloxane compound a is reacted with an alkenyl compound having a host group in step A, the polysiloxane compound a may penetrate the host group; thus, the silicone-based polymer material C can be directly produced by step A.

By performing a polymerization reaction to obtain the chain polymer compound (P1) in the presence of the silicone-based polymer compound (H) in which a movable crosslinked structure is formed, the silicone-based polymer

material C in which the chain polymer compound (P1) penetrates the network of the crosslinked structure can be produced. Specifically, the silicone-based polymer material C can be obtained by performing a polymerization reaction of the polymerizable monomer M in the presence of the silicone-based polymer compound (H). In this production method, since the silicone-based polymer compound (H) has a movable crosslinked structure, swelling of the silicone-based polymer compound (H) easily occurs due to the polymerizable monomer M, and as a result, the growing chain of the polymerizable monomer M easily penetrates the network of the movable crosslinked structure.

Silicone-based Polymer Material C'

The silicone-based polymer material C' comprises a crosslinked structure containing the silicone-based polymer compound (H) and a chain polymer compound (P1), wherein the crosslinked structure has a structure in which the at least one host group of the silicone-based polymer compound (H) is penetrated by the chain polymer compound (P1).

Fig. 2 schematically shows the structure of the silicone-based polymer material C'. The chain polymer compound (P1) penetrates the host group of the silicone-based polymer compound (H) to form a crosslinked structure that is movable (movable crosslinked structure). This improves the mechanical properties (in particular, both Young's modulus and fracture energy) of the silicone-based polymer compound (H), thus allowing it to have excellent flexibility while being tough.

In the silicone-based polymer material C', the chain polymer compound (P1) is the same as the chain polymer compound (P1) in the silicone-based polymer material C. From the viewpoint that the chain polymer compound (P1) can easily penetrate a host group, the chain polymer compound (P1) is preferably a polymer of (meth)acrylic acid, a (meth)acrylic acid ester, or (meth)acrylamide or a derivative thereof, and more preferably a polymer of methyl (meth)acrylate, ethyl (meth)acrylate, n-propyl (meth)acrylate, isopropyl (meth)acrylate, or the like.

In the silicone-based polymer material C', when the chain polymer compound (P1) has an aqueous bonding functional group, such as a hydroxy group or a carboxy group, the mechanical properties are likely to be improved by intermolecular hydrogen bonding; thus, it is particularly preferred that the chain polymer compound (P1) has an aqueous bonding functional group. From this viewpoint, the chain polymer compound (P1) is preferably a copolymer of an alkyl (meth)acrylate described above and a hydroxy group-containing (meth)acrylic ester described above, or the chain polymer compound (P1) may be a homopolymer of a hydroxy group-containing (meth)acrylic ester described above. When the chain polymer compound (P1) is a copolymer of an alkyl (meth)acrylate described above and a hydroxy group-containing (meth)acrylic ester described above, the content of the alkyl (meth)acrylate and the hydroxy group-containing (meth)acrylic ester is not particularly limited. For example, the content of the hydroxy group-containing (meth)acrylic ester is 5 to 80 mass%, and preferably 10 to 60 mass%.

In the silicone-based polymer material C', other examples of the chain polymer compound (P1) include the polyaddition polymer compounds and polycondensation polymer compounds described above, such as polyurethane. These polymer compounds are produced by a polymerization reaction using two or more compounds (hereinafter referred to as "polyaddition compounds") selected from the group consisting of compounds having one or two amino groups, compounds having one or two hydroxy groups, compounds having one or two carboxy groups, compounds having one or two epoxy groups, compounds having one or two isocyanate groups, compounds having one or two thiol groups, and compounds having one or two carboxylic acid chlorides. In particular, preferred examples of the chain polymer compound (P1) as a polyaddition polymer compound or a polycondensation polymer compound include a urethane resin and an epoxy resin.

Examples of compounds having one or two amino groups include 1-adamantanamine, benzylamine, tert-butylamine, butylamine, 1-aminopyrene, aminoferrocene, 4-aminoazobenzene, 4-aminostilbene, cyclohexylamine, hexylamine, 4,7,10-trioxa-4,6-1,13-tridecanediamine, 4,4'-diaminodiphenylmethane, p-xylylenediamine, diaminoferrocene, 4,4'-diaminoazobenzene, 4,4'-diaminostilbene, 1,4-diaminocyclohexane, 1,6-diaminocyclohexane, $\alpha,\omega$-diaminopolyethylene glycol, $\alpha,\omega$-diaminopolypropylene glycol, 2,2-bis(4-aminophenyl)propane 1,1-bis(4-aminophenyl)-1-phenylethane, 2,2-bis(4-aminophenyl)hexafluoropropane, 2,2-bis(4-aminophenyl) butane, bis(4-aminophenyl)diphenylmethane, 2,2-bis(3-methyl-4-aminophenyl)propane, bis(4-aminophenyl)-2,2-dichloroethylene, 1,1-bis(4-aminophenyl)ethane, 2,2-bis(4-amino-3-isopropylphenyl)propane, 1,3-bis(2-(4-aminophenyl)-2-propyl)benzene, bis(4-aminophenyl)sulfone, 1,4-bis(2-(4-aminophenyl)-2-propyl)benzene, 5,5'-(1-methylethylidene)-bis[1,1'-(bisphenyl)-2-amine]propane, 1,1-bis(4-aminophenyl)-3,3,5-trimethylcyclohexane, 1,1-bis(4-aminophenyl)cyclohexane, and the like.

Examples of compounds having one or two hydroxy groups include 1-hydroxyadamantane, benzyl alcohol, tert-butyl alcohol, butyl alcohol, 1-hydroxypyrene, 1-hydroxymethylferrocene, 4-hydroxyazobenzene, 4-hydroxystilbene, cyclohexanol, hexanol, 4,4'-dihydroxydiphenylmethane, 2,2-bis(4-hydroxyphenyl)propane, 1,4-benzenedimethanol, 1,1'-dihydroxymethylferrocene, 4,4'-dihydroxyazobenzene, 4,4'-dihydroxystilbene, 1,3-propanediol, polytetrahydrofuran, 1,4-cyclohexanol, 1,6-hexanediol, polyethylene glycol, polypropylene glycol, 1,1-bis(4-hydroxyphenyl)-1-phenylethane, 2,2-bis(4-hydroxyphenyl)hexafluoropropane, 2,2-bis(4-hydroxyphenyl)butane, bis(4-hydroxyphenyl)diphenylmethane, 2,2-bis(3-methyl-4-hydroxyphenyl)propane, bis(4-hydroxyphenyl)-2,2-dichloroethylene, 1,1-bis(4-hydroxyphenyl)ethane, 2,2-bis(4-hydroxy-3-isopropylphenyl)propane, 1,3-bis(2-(4-hydroxyphenyl)-2-propyl)benzene, bis(4-hydroxyphenyl)sulfone, 1,4-bis(2-(4-hydroxyphenyl)-2-propyl)benzene, 5,5'-(1-methylethylidene)-bis[1,1'-(bisphenyl)-2-hydroxy]propane, 1,1-bis(4-hydroxyphenyl)-3,3,5-trimethylcyclohexane, 1,1-bis(4-hydroxyphenyl)cyclohexane, bisphenol A, and the like. Of these, propanediol (POD) and polytetrahydrofuran (PTHF) are preferred. Propanediol (POD) and polytetrahydrofuran (PTHF) may be used in combination, and it is particularly preferred that polytetrahydrofuran (PTHF) is used alone.

Examples of compounds having one or two carboxy groups include 1-carboxyadamantane, benzoic acid, pivalic acid, butanoic acid, 1-carboxypyrene, 1-carboxyferrocene, 4-carboxyazobenzene, 4-carboxystilbene, cyclohexanoic acid, hexanoic acid, 4,4'-dicarboxydiphenylmethane, 1,4-benzenedicarboxylic acid, 1,4-phenylenediacetic acid, 1,1'-dicarboxyferrocene, 4,4'-dicarboxyazobenzene, 4,4'-dicarboxystilbene, 1,4-cyclohexanedicarboxylic acid, 1,6-hexanedicarboxylic acid, α,ω-dicarboxypolyethylene glycol, α,ω-dicarboxypolypropylene glycol, 2,2-bis(4-carboxyphenyl)propane, 1,1-bis(4-carboxyphenyl)-1-phenylethane, 2,2-bis(4-carboxyphenyl)hexafluoropropane, 2,2-bis(4-carboxyphenyl)butane, bis(4-carboxyphenyl)diphenylmethane, 2,2-bis(3-methyl-4-carboxyphenyl)propane, bis(4-carboxyphenyl)-2,2-dichloroethylene, 1,1-bis(4-carboxyphenyl)ethane, 2,2-bis(4-carboxy-3-isopropylphenyl)propane, 1,3-bis(2-(4-carboxyphenyl)-2-propyl)benzene, bis(4-carboxyphenyl)sulfone, 1,4-bis(2-(4-carboxyphenyl)-2-propyl)benzene, 5,5'-(1-methylethylidene)-bis[1,1'-(bisphenyl)-2-carboxy]propane, 1,1-bis(4-carboxyphenyl)-3,3,5-trimethylcyclohexane, 1,1-bis(4-carboxyphenyl)cyclohexane, and the like.

Examples of compounds having one or two carboxylic acid chlorides include 1-adamantanecarbonyl chloride, terephthaloyl chloride, trimethylacetyl chloride, butyryl chloride, 1-pyrenecarbonyl chloride, 1-ferrocenecarbonyl chloride, 4-azobenzenecarbonyl chloride, 4-stilbenecarbonyl chloride, cyclohexanecarbonyl chloride, hexyl chloride, 4,4'-diphenylmethanedicarbonyl chloride, 1,4-benzenedicarbonyl chloride, 1,4-phenylenedicarbonyl chloride, 1,1'-ferrocenedicarbonyl chloride, 4,4'-azobenzenedicarbonyl chloride, 4,4'-stilbenecarbonyl chloride, 1,4-cyclohexanedicarbonyl chloride, 1,6-hexanedicarbonyl chloride, α,ω-polyethyleneglycol dicarbonyl chloride, α,ω-polypropyleneglycol dicarbonyl chloride, 2,2-bis(4-phenylcarbonylchloride)propane, 1,1-bis(4-phenylcarbonylchloride)-1-phenylethane, 2,2-bis(4-phenylcarbonylchloride)hexafluoropropane, 2,2-bis(4-phenylcarbonylchloride)butane, bis(4-phenylcarbonylchloride)diphenylmethane, 2,2-bis(3-methyl-4-phenylcarbonylchloride)propane, bis(4-phenylcarbonylchloride)-2,2-dichloroethylene, 1,1-bis(4-phenylcarbonylchloride)ethane, 2,2-bis(3-isopropylphenyl-4-carbonylchloride)propane, 1,3-bis(2-(4-phenylcarbonylchloride)-2-propyl)benzene, bis(4-phenylcarbonylchloride)sulfone, 1,4-bis(2-(4-phenylcarbonylchloride)-2-propyl)benzene, 5,5'-(1-methylethylidene)-bis[1,1'-(bisphenyl)-2-carbonylchloride]propane, 1,1-bis(4-phenylcarbonylchloride)-3,3,5-trimethylcyclohexane, 1,1-bis(4-phenylcarbonylchloride)cyclohexane, and the like.

Examples of compounds having one or two epoxy groups include adamantane oxide, styrene oxide, 1,2-epoxybutane, 1-epoxypyrene, epoxyferrocene, 4-epoxyazobenzene, 4-epoxystilbene, cyclohexyl oxide, 1,2-epoxyhexane, 2,2'-bis(4-glycidyloxyphenyl)propane, p-diglycidyloxybenzene, diglycidyloxyferrocene, 4,4'-diglycidyloxyazobenzene, 4,4'-diglycidyloxyferrocene, 1,4-diglycidyloxycyclohexane, 1,6-diglycidyloxycyclohexane, α,ω-diglycidyloxypolyethylene glycol, α,ω-diglycidyloxypolypropylene glycol, 1,1-bis(4-glycidyloxyphenyl)-1-phenylethane, 2,2-bis(4-glycidyloxyphenyl)hexafluoropropane, 2,2-bis(4-glycidyloxyphenyl)butane, bis(4-glycidyloxyphenyl)diphenylmethane, 2,2-bis(3-methyl-4-glycidyloxyphenyl)propane, bis(4-glycidyloxyphenyl)-2,2-dichloroethylene, 1,1-bis(4-glycidyloxyphenyl)ethane, 2,2-bis(4-glycidyloxy-3-isopropylphenyl)propane, 1,3-bis(2-(4-glycidyloxyphenyl)-2-propyl)benzene, bis(4-glycidyloxyphenyl)sulfone, 1,4-bis(2-(4-glycidyloxyphenyl)-2-propyl)benzene, 5,5'-(1-methylethylidene)-bis[1,1'-(bisphenyl)-2-glycidyloxy]propane, 1,1-bis(4-glycidyloxyphenyl)-3,3,5-trimethylcyclohexane, 1,1-bis(4-glycidyloxyphenyl)cyclohexane, and the like.

Examples of compounds having one or two isocyanate groups include 1-adamantane isocyanate, benzyl isocyanate, phenyl isocyanate, tert-butyl isocyanate, butyl isocyanate, 1-pyrene isocyanate, ferrocene isocyanate, azobenzene-4-isocyanate, stilbene-4-isocyanate, cyclohexane isocyanate, hexane isocyanate, hexamethylene diisocyanate, 4,4'-diisocyanate phenylmethane, p-benzene diisocyanate, ferrocene-1,1'-diisocyanate, azobenzene-4,4'-diisocyanate, stilbene-4,4'-diisocyanate, cyclohexane-1,4-diisocyanate, cyclohexane-1,6-diisocyanate, polyethylene glycol diisocyanate, polypropylene glycol diisocyanate, 2,2-bis(4-phenylisocyanate)propane, 1,1-bis(4-phenylisocyanate)-1-phenylethane, 2,2-bis(4-phenylisocyanate)hexafluoropropane, 2,2-bis(4-phenylisocyanate)butane, bis(4-phenylisocyanate)diphenylmethane, 2,2-bis(3-methyl-4-phenylisocyanate)propane, bis(4-phenylisocyanate)-2,2-dichloroethylene, 1,1-bis(4-phenylisocyanate)ethane, 2,2-bis(3-isopropyl-4-phenylisocyanate)propane, 1,3-bis(2-(4-phenylisocyanate)-2-propyl)benzene, bis(4-phenylisocyanate)sulfone, 1,4-bis(2-(4-phenylisocyanate)-2-propyl)benzene, 5,5'-(1-methylethylidene)-bis[1,1'-(bisphenyl)-2-isocyanate]propane, 1,1-bis(4-phenylisocyanate)-3,3,5-trimethylcyclohexane, 1,1-bis(4-phenylisocyanate)cyclohexane, and the like.

Examples of compounds having one or two thiol groups include 1-adamantanethiol, benzylthiol, tert-mercaptan, butanethiol, 1-thiolpyrene, ferrocenethiol, 4-thioazobenzene, 4-thiostilbene, cyclohexylthiol, hexanethiol, 4,4'-dithiophenylmethane, p-benzenedithiol, 1,1'-dithioferrocene, 4,4'-dithioazobenzene, 4,4'-dithiostilbene, 1,4-dithiocyclohexane, 1,6-dithiocyclohexane, α,ω-dithiopolyethylene glycol, α,ω-dithiopolypropylene glycol, 1,1-bis(4-thiophenyl)-1-phenylethane, 2,2-bis(4-thiophenyl)hexafluoropropane, 2,2-bis(4-thiophenyl)butane, bis(4-thiophenyl)diphenylmethane,

2,2-bis(3-methyl-4-thiophenyl)propane, bis(4-thiophenyl)-2,2-dichloroethylene, 1,1-bis(4-thiophenyl)ethane, 2,2-bis(4-thio-3-isopropylphenyl)propane, 1,3-bis(2-(4-thiophenyl)-2-propyl)benzene, bis(4-thiophenyl)sulfone, 1,4-bis(2-(4-thiophenyl)-2-propyl)benzene, 5,5'-(1-methylethylidene)-bis[1,1'-(bisphenyl)-2-thiol]propane, 1,1-bis(4-thiophenyl)-3,3,5-trimethylcyclohexane, 1,1-bis(4-thiophenyl)cyclohexane, and the like.

When the chain polymer compound (P1) is a polyaddition polymer compound or a polycondensation polymer compound, the chain polymer compound (P1) is preferably a urethane resin or an epoxy resin. When the chain polymer compound (P1) is a urethane resin, it is preferably a polymer of a compound having two hydroxy groups and a compound having two isocyanates, more preferably a polymer of propanediol (POD), polytetrahydrofuran (PTHF; number average molecular weight: about 1000), and hexamethylene diisocyanate (HDI), and particularly preferably a polymer of polytetrahydrofuran (PTHF; number average molecular weight: about 1000) and hexamethylene diisocyanate (HDI).

In the silicone-based polymer material C', the content of the silicone-based polymer compound (H) and the chain polymer compound (P1) is not particularly limited. For example, from the viewpoint of ease of enhancing the mechanical properties, the content of the silicone-based polymer compound (H) is, for example, 10 mass% or more, preferably 20 mass% or more, more preferably 40 mass% or more, and still more preferably 50 mass% or more, based on the total mass of the silicone-based polymer compound (H) and the chain polymer compound (P1). From the viewpoint of ease of enhancing the mechanical properties, the content of the silicone-based polymer compound (H) may also be 90 mass% or less, preferably 80 mass% or less, and more preferably 70 mass% or less, based on the total mass of the silicone-based polymer compound (H) and the chain polymer compound (P1).

The silicone-based polymer material C' may contain additives in addition to the silicone-based polymer compound (H) and the chain polymer compound (P1), or may be formed only of the silicone-based polymer compound (H) and the chain polymer compound (P1).

The method for producing the silicone-based polymer material C' is not particularly limited, and, for example, a wide range of known methods can be used. In the production of silicone-based polymer material C, a crosslinked structure (movable crosslinked structure) of the silicone-based polymer compound (H) is formed in the process of drying a solution of the silicone-based polymer compound (H), as described above. However, in the silicone-based polymer material C', it is not always necessary to form a crosslinked structure of the silicone-based polymer compound (H). Thus, in the production of the silicone-based polymer material C', the need for the step of drying a solution of the silicone-based polymer compound (H) can be eliminated. Specifically, the silicone-based polymer material C' can be produced by performing a polymerization reaction of the chain polymer compound (P1) in a solution of the silicone-based polymer compound (H). The chain polymer compound (P1) elongated in the polymerization process of the chain polymer compound (P1) penetrates the host group of the silicone-based polymer compound (H) .

In the production of the silicone-based polymer material C', it is also possible to use a method of performing a polymerization reaction in a state in which a film formed by drying a solution of the silicone-based polymer compound (H) is impregnated with a monomer to form the chain polymer compound (P1). If the silicone-based polymer compound (H) contains a constituent unit represented by formula (3.2), this method can be suitably used when the thiol group of A is partially or fully substituted with a $C_{3-8}$ alkyl group.

When the chain polymer compound (P1) is a polyaddition polymer compound or polycondensation polymer compound described above, such as polyurethane, the silicone-based polymer material C' can be produced by, for example, a method comprising performing an addition reaction of the polysiloxane compound a and the alkenyl compound c having a host group in a solution containing the polysiloxane compound a, the alkenyl compound c having a host group, and at least two of the polyaddition compounds described above in the same manner as in step A, and then performing a polymerization reaction of the polyaddition compounds. The chain polymer compound (P1) elongated in the polymerization process of the chain polymer compound (P1) penetrates the host group of the silicone-based polymer compound (H). For the polymerization reaction of the polyaddition compounds, for example, the same conditions as in known methods can be used, and if necessary, a known catalyst can be used.

Silicone-based Polymer Material D

The silicone-based polymer material D comprises the silicone-based polymer compound (H) and a chain polymer compound (P2) other than the silicone-based polymer compound (H), wherein the chain polymer compound (P2) has at least one host group in a side chain, and the host group is a monovalent group formed by removing one hydrogen atom or one hydroxy group from a cyclodextrin or a cyclodextrin derivative, the at least one host group of the silicone-based polymer compound (H) is penetrated by the main chain of another silicone-based polymer compound (H), and the at least one host group of the chain polymer compound (P2) is penetrated by the main chain of another chain polymer compound (P2).

Fig. 3 schematically shows the structure of the silicone-based polymer material D. As shown in Fig. 3, the silicone-based polymer material D is composed of a movable crosslinked structure formed by the silicone-based polymer compound (H) and a movable crosslinked structure formed by the chain polymer compound (P2). This crosslinked

structure can also be referred to as a "double cross network." The crosslinked structure allows the silicone-based polymer material D to have excellent mechanical properties (in particular, improvement in both Young's modulus and fracture energy) and to have excellent flexibility while being tough.

The chain polymer compound (P2) is not particularly limited as long as it has a host group in a side chain, and a wide range of known polymers having a host group can be used. Examples include a wide range of polymers having a structural unit based on the compound represented by formula (h1) or a structural unit based on the compound represented by formula (h2). Examples of the chain polymer compound (P2) include copolymers of the compound represented by formula (h1) or the compound represented by formula (h2), and various polymerizable monomers.

The polymerizable monomer as used herein is, for example, the same as the polymerizable monomer M for obtaining the chain polymer compound (P1), and is preferably methyl (meth)acrylate, ethyl (meth)acrylate, n-propyl (meth)acrylate, isopropyl (meth)acrylate, or the like.

The content of the host group in the chain polymer compound (P2) is preferably 0.2 mol% or more, more preferably 0.5 mol% or more, still more preferably 0.8 mol% or more, and particularly preferably 1 mol% or more, and is also preferably 20 mol% or less, more preferably 15 mol% or less, still more preferably 10 mol% or less, and particularly preferably 5 mol% or less, based on all of the structural units of the chain polymer compound (P2).

The mass average molecular weight (Mw) of the chain polymer compound (P2) is also not particularly limited, and is, for example, 10000 to 2000000, and preferably 20000 to 1000000. The chain polymer compound (P2) may have a structure of, for example, a homopolymer or a random polymer. The chain polymer compound P may be linear. The chain polymer compound P may also have a branched structure or a crosslinked structure as long as the effects of the present invention are not impaired.

In the silicone-based polymer material D, the content of the silicone-based polymer compound (H) and the chain polymer compound (P2) is not particularly limited. For example, from the viewpoint of ease of enhancing the mechanical properties, the content of the silicone-based polymer compound (H) is, for example, 10 mass% or more, preferably 20 mass% or more, more preferably 40 mass% or more, and still more preferably 50 mass% or more, based on the total mass of the silicone-based polymer compound (H) and the chain polymer compound (P2). From the viewpoint of ease of enhancing the mechanical properties, the content of the silicone-based polymer compound (H) may also be 90 mass% or less, preferably 80 mass% or less, and more preferably 70 mass% or less, based on the total mass of the silicone-based polymer compound (H) and the chain polymer compound (P2).

The silicone-based polymer material D may contain additives in addition to the silicone-based polymer compound (H) and the chain polymer compound (P1), or may be formed only of the silicone-based polymer compound (H) and the chain polymer compound (P2).

The method for producing the silicone-based polymer material D is not particularly limited, and, for example, a wide range of known methods can be used. For example, the silicone-based polymer material D can be produced by performing a polymerization reaction to obtain the chain polymer compound (P2), in the presence of the silicone-based polymer compound (H) in which a movable crosslinked structure is formed. Specifically, the silicone-based polymer material D is obtained by performing a polymerization reaction of a mixture of the polymerizable monomer M, and the structural unit based on the compound represented by formula (h1) or the compound represented by formula (h2) in the presence of the silicone-based polymer compound (H) in which a movable crosslinked structure is formed. In this production method, since the silicone-based polymer compound (H) has a movable crosslinked structure, swelling of the silicone-based polymer compound (H) easily occurs due to the polymerizable monomer M, and as a result, the growing chain of the polymerizable monomer M easily penetrates the network of the crosslinked structure.

Silicone-based Polymer Material

The polymer material of the present invention encompasses the polymer material A, polymer material B, polymer material C, polymer material C', and polymer material D, as described above.

The shape of the silicone-based polymer material is not particularly limited. The silicone-based polymer material may be a molded article, such as a film, a sheet, a plate, or a block, or may be in the form of particles, fibers, granules, pellets, or the like.

When a molded article of the silicone-based polymer material is produced, the production method is not particularly limited, and, for example, a wide range of known molding methods can be used. Specific examples include a casting method, a press molding method, an extrusion molding method, an injection molding method, and the like.

The silicone-based polymer material of the present invention exhibits excellent mechanical properties, and in particular, exhibits an increase in both Young's modulus and fracture energy; thus, the silicone-based polymer material of the present invention is a flexible and tough material. Moreover, the silicone-based polymer material of the present invention can have high transparency.

Thus, the silicone-based polymer material of the present invention can be used for various applications. In particular, since the silicone-based polymer material of the present invention has high transparency, the silicone-based

polymer material of the present invention can be suitably used as an optical material.

The optical material may contain additives as long as it contains the silicone-based polymer material of the present invention. The method for producing the optical material is also not particularly limited, and a wide range of known production methods for an optical material can be used.

Since the optical material contains the silicone-based polymer material of the present invention, the optical material can exhibit excellent transparency while being tough, and is suitable for use in various fields in which transparency is required.

Examples

The following Examples describe the present invention in more detail. However, the present invention is not limited to the embodiments of the Examples.

Production Example 1

5 g (3.9 mmol) of γ-cyclodextrin, 700 mg (6.9 mmol) of N-hydroxymethylacrylamide, and 95 mg (0.6 mmol) of p-toluenesulfone acid monohydrate were weighed into a 200-mL roundbottom glass flask and added to 25 mL of N,N-dimethylformamide to prepare a reaction solution. The solution was heated to 90°C in an oil bath with stirring over 1 hour to obtain a reaction solution. Subsequently, the reaction solution was allowed to cool and poured into 45 mL of acetone while the acetone was vigorously stirred. The precipitate formed was separated by filtration and washed with 10 mL of acetone 3 times and dried under reduced pressure at room temperature for 1 hour to obtain a reaction product. The reaction product was dissolved in 100 mL of distilled water and passed through a column packed with a porous polystyrene resin (Diaion HP-20, produced by Mitsubishi Chemical Corporation) (apparent density: 600 g/L) to allow for adsorption for 30 minutes. The solution components were then removed, and 50 mL of a 10% aqueous methanol (or acetonitrile) solution was newly passed through the column 3 times to wash the polystyrene resin, thereby removing unreacted γ-cyclodextrin. Subsequently, 500 mL of a 25% aqueous methanol solution was passed through the column twice to elute acrylamide methyl-γ-cyclodextrin (indicated as "γCDAAmMe"), which is the target product. The solvent was removed under reduced pressure to obtain γCDAAmMe as a white powder.

20 g of the γCDAAmMe was dissolved in 300 mL of pyridine, and 170.133 g of acetic anhydride was added. The resulting mixture was stirred at 55°C for 12 hours or more. 50 mL of methanol was then added for quenching, and the resulting mixture was concentrated in an evaporator until the amount of the content was reduced to 200 mL. The obtained concentrate was added dropwise to 2000 mL of water, and the resulting precipitate was collected. The precipitate was dissolved in 200 mL of acetone. The resulting solution was added dropwise to 2000 mL of water. The precipitate formed was collected and dried under reduced pressure to isolate a polymerizable monomer having a host group, which is the target compound. The obtained polymerizable monomer having a host group was a compound represented by the following formula (h1-2) (hereinafter referred to as "PAcγCDAAmMe").

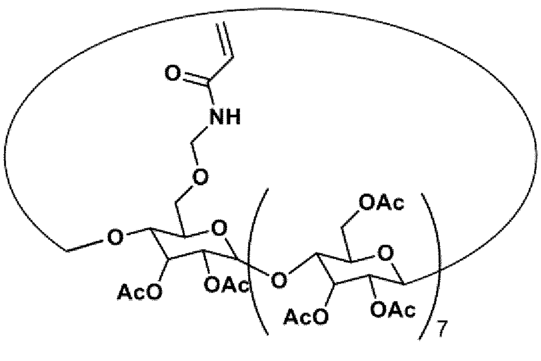

(h 1 − 2)

Example 1-1

A silicone-based polymer compound (H) was produced according to the reaction scheme shown in Fig. 4. First, PDMS-SH, PAcγCDAAmMe obtained in Production Example 1, and 1-pentene were dissolved in chloroform to prepare a solution. Irgacure 184 (registered trademark) as a photoinitiator was added to the solution in an amount of 0.1 eq. relative to the SH group in PDMS-SH to prepare a starting material. The PDMS-SH is a polysiloxane compound a that contains 90 mol% of a constituent unit represented by formula (3.1) (wherein $R^3 = R^4 = CH_3$) and 10 mol% of a constituent unit represented by formula (3.2) (wherein $R^7 = CH_3$, $R^8 = -(CH_2)_3-$, and A = SH) . PDMS-SH was prepared by a known

production method. The amounts of PDMS-SH, PAcγCDAAmMe, and 1-pentene to be used were adjusted so that the amount of the SH group in the PDMS-SH was equal to the total amount of alkenyl groups in the PAcγCDAAmMe and 1-pentene. The amount of chloroform to be used was set to 1 mL per 100 mg of PDMS-SH. Further, the amount of PAcγCDAAmMe to be used was adjusted so that in the silicone-based polymer compound (H) shown in the reaction scheme of Fig. 4, x was 1.

The starting material was irradiated with a Hg lamp for 30 minutes to allow the reaction to proceed, thus obtaining a reaction solution. Further, excess 1-pentene was added to the reaction solution, and the reaction was continued for 30 minutes to obtain a solution. The obtained solution was placed in a mold made of Teflon (registered trademark) sheets and air-dried and then further dried in a vacuum oven at 70°C to produce a silicone-based polymer compound (H) in the form of a film with a thickness of 200 to 400 μm.

Example 1-2

A silicone-based polymer compound (H) was produced in the same manner as in Example 1-1, except that the amount of PAcγCDAAmMe to be used was adjusted so that x was 0.5.

Example 1-3

A silicone-based polymer compound (H) was produced in the same manner as in Example 1-1, except that the amount of PAcγCDAAmMe to be used was adjusted so that x was 2.

Example 1-4

A silicone-based polymer compound (H) was produced in the same manner as in Example 1-1, except that 1-pentene was not used.

Example 2-1

A silicone-based polymer compound (H) was produced in the same manner as in Example 1-1, except Irgacure 1173 (registered trademark) was used as the photoinitiator.

Example 2-2

A silicone-based polymer compound (H) was produced in the same manner as in Example 1-2, except that Irgacure 1173 (registered trademark) was used as the photoinitiator.

Example 2-3

A silicone-based polymer compound (H) was produced in the same manner as in Example 1-3, except that Irgacure 1173 (registered trademark) was used as the photoinitiator.

Example 3-1

A silicone-based polymer compound (H) was produced according to the reaction scheme shown in Fig. 5. Specifically, a silicone-based polymer compound (H) was produced in the same manner as in Example 1-1, except that 1-pentene was not used.

Example 3-2

A silicone-based polymer compound (H) was produced in the same manner as in Example 1-2, except that 1-pentene was not used.

Example 3-3

A silicone-based polymer compound (H) was produced in the same manner as in Example 1-3, except that 1-pentene was not used.

Example 4-1

A silicone-based polymer compound (H) was produced according to the reaction scheme shown in Fig. 6. Specifically, a silicone-based polymer compound (H) was produced in the same manner as in Example 1-1, except that allyl alcohol was used in place of 1-pentene.

Example 4-2

A silicone-based polymer compound (H) was produced in the same manner as in Example 1-2, except that allyl alcohol was used in place of 1-pentene.

Example 4-3

A silicone-based polymer compound (H) was produced in the same manner as in Example 1-3, except allyl alcohol was used in place of 1-pentene.

Example 5

A silicone-based polymer compound (G) was produced in the same manner as in Example 4-3, except that 2-ethyl-2-adamantyl acrylate (AdEtA) was used as the alkenyl groupcontaining compound having a guest group in place of PAcγCDAAmMe.

Example 6

The chloroform solution of the silicone-based polymer compound (H) obtained in Example 4-3 and the chloroform solution of the silicone-based polymer compound (G) obtained in Example 5 were mixed and stirred for 30 minutes. The resulting mixture was then placed in a circular Teflon (registered trademark) mold (radius: 3 cm) and air-dried overnight and further dried in a vacuum oven at 70°C to obtain a polymer material A in the form of a film with a thickness of 200 to 400 μm.

Example 7

A silicone-based polymer compound (HG) was produced according to the reaction scheme shown in Fig. 7. First, PDMS-SH, PAcγCDAAmMe obtained in Production Example 1, AdEtA, and allyl alcohol were dissolved in chloroform to prepare a solution. Irgacure 184 (registered trademark) as a photoinitiator was added to the solution in an amount of 0.1 eq. relative to the SH group in PDMS-SH to prepare a starting material. PDMS-SH was prepared by a known production method. The amounts of PDMS-SH, PAcγCDAAmMe, AdEtA, and 1-pentene to be used were adjusted so that the amount of the SH group in the PDMS-SH was equal to the total amount of alkenyl groups in the PAcγCDAAmMe, AdEtA, and 1-pentene. The amount of chloroform to be used was set to 1 mL per 100 mg of PDMS-SH. Further, the amounts of PAcγCDAAmMe and AdEtA to be used were adjusted so that x was 2 and y was 2 in the silicone-based polymer compound (HG) shown in the reaction scheme of Fig. 7.

The starting material was irradiated with a Hg lamp for 30 minutes to allow the reaction to proceed, thus obtaining a reaction solution. The obtained reaction solution was placed in a mold made of Teflon (registered trademark) sheets and air-dried and then further dried in a vacuum oven at 70°C to produce a polymer material B in the form of a film with a thickness of 200 to 400 μm, the polymer material B being formed of a silicone-based polymer compound (HG).

Example 8

A polymer material C was produced according to the reaction scheme shown in Fig. 8. Specifically, ethyl acrylate (EA) and Irgacure 184 (registered trademark) in an amount of 0.002 eq. relative to EA were dissolved in chloroform to prepare a solution. The silicone-based polymer compound (H) obtained in Example 4-3 was added to the solution in such an amount that the mass ratio of the silicone-based polymer compound (H) to ethyl acrylate (EA) was 1:1, and the resulting mixture was allowed to stand for 1 hour to thereby swell the silicone-based polymer compound (H) obtained in Example 4-3. The gel obtained by swelling was interposed between a pair of polypropylene plates. The gel was irradiated with a Hg lamp for 30 minutes to polymerize EA, thus obtaining an elastomer. The obtained elastomer was dried in a vacuum oven at 70°C all night to obtain a polymer material C in the form of a film with a thickness of 200 to 400 μm. This polymer material C had a movable crosslinked structure shown in Fig. 1.

Example 9

A polymer material D was produced according to the reaction scheme shown in Fig. 9. Specifically, ethyl acrylate (EA), PAcγCDAAmM in an amount of 0.01 eq. relative to EA, and Irgacure 184 (registered trademark) in an amount of 0.002 eq. relative to EA were dissolved in chloroform to prepare a solution. The silicone-based polymer compound (H) obtained in Example 4-3 was added to the solution in such an amount that the mass ratio of the silicone-based polymer compound (H) to ethyl acrylate (EA) and PAcγCDAAmM was 1:1. The resulting mixture was allowed to stand for 1 hour to thereby swell the silicone-based polymer compound (H) obtained in Example 4-3. The gel obtained by swelling was interposed between a pair of polypropylene plates. The gel was irradiated with a Hg lamp for 30 minutes to polymerize EA and PAcγCDAAmM, thus obtaining an elastomer. The obtained elastomer was dried in a vacuum oven at 70°C all night to obtain a polymer material D in the form of a film with a thickness of 200 to 400 um. The polymer material D had a movable crosslinked structure shown in Fig 3.

Comparative Example 1-1

A polysiloxane for comparison was produced according to the reaction scheme shown in Fig. 10. First, PDMS-SH, BDA, and 1-pentene were weighed, and Irgacure 1173 (registered trademark) in an amount of 0.1 eq. relative to SH was kneaded in the absence of a solvent to obtain a mixture. The amounts of the components to be used to form the mixture were adjusted so that the amount of the SH group in the PDMS-SH was equal to the total amount of alkenyl groups in the BDA and Pen. The mixture was placed in a circular Teflon (registered trademark) mold and irradiated with a Hg lamp for 30 minutes. Further, 2 mL of 1-pentene was added and the resulting mixture was allowed to react for 30 minutes. The thus obtained elastomer was dried in a vacuum oven at 70°C to obtain a polysiloxane for comparison.

Comparative Example 1-2

A polysiloxane for comparison was obtained in the same manner as in Comparative Example 1-1, except that the amount of alkenyl groups in BPD and pen was 0.5 eq. relative to the SH group in the PDMS-SH.

Comparative Example 1-3

A polysiloxane for comparison was obtained in the same manner as in Comparative Example 1-1, except that the amount of alkenyl groups in BPD and pen was 2 eq. relative to the SH group in the PDMS-SH.

Comparative Example 2

A polymer material as described in Example 1 of WO2021/045203 was prepared.

Table 1

| Example/ Comparative Example | Young's modulus (MPa) | Fracture energy ($MJ \cdot m^{-3}$) | Transparency |
|---|---|---|---|
| Example 1-1 | 1.2±0.051 | 0.53±0.17 | - |
| Example 1-3 | 52±5.1 | 14±2.2 | A |
| Example 2-1 | 0.60±0.045 | 2.0±0.22 | - |
| Example 2-3 | 21±3.5 | 30±2.3 | - |
| Example 3-3 | 100±7.5 | 4.0±0.11 | A |
| Example 4-3 | 6.7±1.3 | 18±0.87 | - |
| Example 6 | 1.4±0.48 | 2.6±0.61 | - |
| Example 7 | 3.7±0.48 | 18±0.32 | - |
| Example 8 | 4.2±0.71 | 0.60±0.20 | - |
| Example 9 | 1.8±0.89 | 0.94±0.053 | - |
| Comparative Example 1-1 | 0.84±0.10 | 0.043±0.0079 | - |
| Comparative Example 2 | 0.12 | 0.055 | B |

Example 10-1

Following the reaction scheme shown in Fig. 11A, silicone-based polymer compound (H) was first produced. PDMS-SH (5.61 mmol, 10 eq.) used in Example 1, PAcγCDAAmMe (0.55 mmol, 1 eq.) obtained in Production Example 1, and allyl alcohol (5.0 mmol, 9 eq.) were dissolved in 20 mL of ethyl acetate to prepare a solution. After Irgacure 1173 (registered trademark) as a photoinitiator was added to the solution so that the amount of Irgacure 1173 was 0.1 eq. relative to the SH group in PDMS-SH, the resulting mixture was then irradiated with a Hg lamp for 60 minutes to allow the reaction to proceed, thus obtaining a silicone-based polymer compound (H). The amounts of PDMS-SH, PAcγCDAAmMe, and allyl alcohol to be used were adjusted so that the amount of the SH group in the PDMS-SH was equal to the total amount of alkenyl groups in the PAcγCDAAmMe and allyl alcohol.

Ethyl acrylate (EA) was added to a solution containing the silicone-based polymer compound (H) so that the EA was present in an amount of 50 mass% based on the total mass of the silicone-based polymer compound (H) and EA. After BAPO (Irgacure 819 (registered trademark)) was further added, the resulting solution was transferred into a mold and the mold inside was irradiated with a 420-nm LED for 1 hour. The polymer thus obtained was air-dried overnight in a draft and finally vacuum-dried in a vacuum oven at 80°C overnight to obtain a polymer material C' in the form of a film with a thickness of 200 to 400 μm. The polymer material C' had a movable crosslinked structure as shown in Fig 2.

Example 10-2

A polymer material C' was obtained in the same manner as in Example 10-1, except that the EA was used in an amount of 20 mass% based on the total mass of the silicone-based polymer compound (H) and EA.

The polymer materials C' obtained in Examples 10-1 and 10-2 both had high transparency. In particular, the polymer material C' obtained in Example 10-1 had better transparency.

Fig. 12 shows tensile test results (stroke-test force curves) of polymer materials C' obtained in Examples 10-1 and 10-2. "PDMS-TAcyyCD-AAI" in Fig. 12(a) and "PDMS-TAcyyCD-AAI (1)" in Fig. 12(b) both show measurement results of the silicone-based polymer compound (H) obtained during the production of Example 10-1.

The silicone-based polymer materials obtained in Examples 10-1 and 10-2 were both found to have excellent mechanical properties and to be tough materials. Further, Fig. 12(b) shows the results of confirming the stress dispersion characteristics by tracking the time variation of the stress when the strain of each silicone-based polymer material is elongated to 400% and fixed. This result clearly shows that the silicone-based polymer material obtained in Example 10-1 also has excellent stress dispersion.

In the obtained time-stress curve (Fig. 12(b)), the stress that changes with time t is defined as σ(t), and curve fitting was performed by the least-squares method using the following Kohlrausch-Williams-Watts formula (KWW formula):

$$\underbrace{\sigma = \sigma_r \exp\left\{-\left(\frac{t}{\tau}\right)^{\beta}\right\}}_{\text{Relaxation component}} + \underbrace{\sigma_\infty}_{\text{Residual component}}$$

wherein $\sigma_r$ represents a stress component that can be relaxed with the lapse of time, $\sigma_\infty$ represents a residual stress component that does not change with time, τ represents a time constant that expresses the speed of stress relaxation, and β represents a dilation index that relates to the relaxation time distribution. These values were derived from curve fitting. Stress dispersion was thus analyzed.

As shown in Table 2, the analysis results show that "PDMS-TAcyγCD-AAI (1)" had a time constant τ of 557s and the polymer material obtained in Example 10-1 (PDMS-TAcyCD-AAI⊃PEA (1;50)) had a time constant τ of 33s, and that "PDMS-TAcyγCD-AAI (1)" had a residual stress component $\sigma_\infty$ of 0.12 MPa and the polymer material obtained in Example 10-1 had a residual stress component $\sigma_\infty$ of 0.01 MPa. From the small time constant τ and the low residual stress component $\sigma_\infty$, the results show that the polymer material obtained in Example 10-1 relaxed a larger amount of stress more quickly. Further, Fig. 12(c) shows the relationship between the stretching speed (10 mm/s or 1 mm/s) and mechanical properties of the polymer material obtained in Example 10-1. From this result, it was found that when the stretching speed of the polymer material obtained in Example 10-1 is increased 10-fold, the breaking strain and the breaking stress of the polymer material obtained in Example 10-1 both increase.

Table 2

| | Relaxation component | | | Residual component |
|---|---|---|---|---|
| | $\sigma_r$ / MPa | $\tau$ / s | $\beta$ | $\sigma_\infty$ / MPa |
| **PDMS-TAcγCD-AAl (1)** | **1.28** | **557** | **0.19** | **0.12** |
| **PDMS-TAcγCD-AAl⊃PEA(1 ; 50)** | **0.18** | **33** | **0.20** | **0.01** |

Example 11-1

A polymer material C' was obtained in the same manner as in Example 10-1, except that 2-hydroxyethyl methacrylate (HEMA) was used in place of EA.

Example 11-2

A polymer material C' was obtained in the same manner as in Example 10-1, except that a mixture of EA and HEMA at a mass ratio of 12.5:37.5 (EA:HEMA) was used in place of EA.

Example 11-3

A polymer material C' was obtained in the same manner as in Example 10-1, except that a mixture of EA and HEMA at a mass ratio of 37.5:12.5 (EA:HEMA) was used in place of EA.

Fig. 13 shows tensile test results (stroke-test force curves) of the polymer materials C' obtained in Examples 11-1 to 11-3. In Fig. 13(a), "PDMS-TAcyγCD-AAI" refers to the silicone-based polymer compound (H) obtained during the production of Example 10-1, and "PDMS-TAcγCD-AAAI⊃PHEMA (50)" refers to the polymer material C' obtained in Example 11-1.

From Figs. 13(a) and 13(b), the polymer materials C' obtained in Examples 11-1 to 11-3 were also found to have excellent mechanical properties and to be tough materials. It is presumed that such enhanced mechanical properties were achieved because hydroxyl groups (i.e., hydrogen bonding functional groups) present in the chain polymer compound (P1) penetrating host groups enabled intermolecular hydrogen bonding.

Example 12-1

A polymer material C' was obtained in the same manner as in Example 11-2, except that 1-pentene was used in place of the allyl alcohol.

Fig. 14 shows tensile test results (stroke-test force curves) of the polymeric materials C' obtained in Example 12-1 and Example 11-2. From the results, the polymer material C' obtained in Example 12-1 was also found to have excellent mechanical properties and to be a tough material. The polymer material C' obtained in Example 12-1 had even more enhanced mechanical properties than the polymer material C' obtained in Example 11-2. This result suggests that capping the SH at the PDMS site of the silicone-based polymer compound (H) with an alkyl group of the pentyl group or the like improves mechanical properties.

Example 13-1

Following the reaction scheme shown in Fig. 15, a polymer material C' having a movable crosslinked structure as shown in Fig. 2 was produced. 123 mg of PDMS-SH, 36 mg of PAcγCDAAmMe obtained in Example 1, 76 mg (1 mmol) of propanediol (POD), and 1000 mg (1 mmol) of polytetrahydrofuran (PTHF, number average molecular weight: about 1000) were dissolved in 10 mL of dichloromethane (DCM). 2.5 mg of Irgacure 1173 (registered trademark) was added to the solution to prepare a starting material liquid. The starting material liquid was irradiated with a mercury lamp at 25°C for 1 hour with stirring to perform a polymerization reaction. DBTDA (dibutyltin dilaurate) as a tin catalyst and 353 mg (2.1 mmol) of hexamethylene diisocyanate (HDI) were then added, and the resulting mixture as stirred at 25°C for 24 hours. The resulting polymerization mixture was poured into a cube mold (size: 50 mm x 50 mm x 20 mm) made of Teflon (registered trademark) and allowed to stand and dried at 25°C for 16 hours or more, thereby obtaining a polymer material C' having a movable crosslinked structure as shown in Fig 2. The chain polymer compound (P1) in the polymer material C' is a urethane resin.

Example 13-2

Following the reaction scheme shown in Fig. 15, a polymer material C' having a movable crosslinked structure as shown in Fig 2 was produced. 1002 mg of PDMS-SH, 293 mg of PAcγCDAAmMe obtained in Production Example 1, 8 mg (0.1 mmol) of propanediol (POD), and 100 mg (0.1 mmol) of polytetrahydrofuran (PTHF, number average molecular weight: about 1000) were dissolved in 10 mL of dichloromethane (DCM), and 21 mg of Irgacure 1173 (registered trademark) was added to the solution to prepare a starting material liquid. The starting material liquid was irradiated with a mercury lamp with stirring at 25°C for 1 hour to perform a polymerization reaction. DBTDA (dibutyltin dilaurate) as a tin catalyst and 35 mg (0.21 mmol) of hexamethylene diisocyanate (HDI) were added, and the resulting mixture was stirred at 25°C for 24 hours. The obtained polymerization mixture was poured into a cube mold (size: 50 mm x 50 mm x 20 mm) made of Teflon (registered trademark) and allowed stand and dried at 25°C for 16 hours or more, thereby obtaining a polymer material C' having a movable crosslinked structure as shown in Fig 2.

Comparative Example 13-1

1429 mg of PDMS-SH, 76 mg (1 mmol) of propanediol (POD), and 1000 mg (1 mmol) of polytetrahydrofuran (PTHF, number average molecular weight: about 1000) were dissolved in 10 mL of dichloromethane (DCM) to prepare a starting material liquid. DBTDA (dibutyltin dilaurate) as a tin catalyst and 353 mg (2.1 mmol) of hexamethylene diisocyanate (HDI) were added to the starting material liquid, and the resulting mixture was stirred at 25°C for 24 hours. The obtained polymerization mixture was poured into a cube mold (size: 50 mm x 50 mm x 20 mm) made of Teflon (registered trademark) and allowed to stand and dried at 25°C for 16 hours or more, thereby obtaining a polymer material not containing a movable crosslinked structure.

Figs. 16(a) and 16(b) show tensile test results (stroke-test force curves) of the polymer material C' obtained in Example 13-1 and the polymer material obtained in Comparative Example 13-1. In Fig. 16, "PDMS-CD(90)⊃PU" refers to the polymer compound C' obtained in Example 13-1, "PDMS-CD(10)⊃PU" refers to the polymer compound C' obtained in Example 13-2, and "PDMS-CD(50)PU" refers to the polymer compound obtained in Comparative Example 13-1.

Table 3 summarizes the results of Fig. 16. From the results in Table 3 and Fig. 16, it was found that the polymer materials C' obtained in Examples 13-1 and 13-2 have better mechanical properties than the polymer material of Comparative Example 1, which does not have a host group (i.e., polymer material without forming a movable crosslinked structure) and are tough materials.

Table 3

| Example/ Comparative Example | Young's modulus (MPa) | Fracture energy ($MJ \cdot m^{-3}$) |
|---|---|---|
| Example 13-1 | 104.14 ± 6.22 | 20.17 ± 2.55 |
| Example 13-2 | 2.34 ± 0.48 | 0.77 ± 0.10 |
| Comparative Example 13-1 | 0.90 ± 0.14 | 0.14 ± 0.04 |

Example 14-1

Following the reaction scheme shown in Fig. 17, a polymer material C' having a movable crosslinked structure as shown in Fig. 2 was produced. PDMS-SH (5.61 mmol, 10 eq.) used in Example 1, PAcγCDAAmMe (0.55 mmol, 1 eq.) obtained in Production Example 1, and pentene (5.0 mmol, 9 eq.) were dissolved in 20 mL of ethyl acetate. After Irgacure 1173 (registered trademark) as a photoinitiator was added to the solution in an amount of 0.1 eq. relative to the SH group in PDMS-SH, the resulting mixture was irradiated with a Hg lamp for 60 minutes to allow the reaction to proceed, thereby obtaining a solution containing a silicone-based polymer compound (H). The solution was formed into a film by drying in a Windy oven at 70°C for 8 hours and drying in a vacuum oven at 80°C for 12 hours, thus obtaining a film of the silicone-based polymer compound (H).

Subsequently, 104 mg of polyethylene glycol modified with glycidyl groups at both ends (PEG-GLY, number average molecular weight: 500, 0.21 mmol) and 46 mg of 4,7,10-trioxa-4,6-1,13-tridecanediamine (DEG, 0.21 mmol) were added to 150 ml of toluene to prepare a solution, and 150 mg of the silicone-based polymer compound (H) film was impregnated with the solution. Two days later, an organogel into which some of the solution was incorporated was allowed to stand in a Windy oven at 70°C for 8 hours to perform a polyaddition reaction, followed by drying in a vacuum oven at 80°C for 12 hours, thus obtaining a polymer material C' having a movable crosslinked structure as shown in Fig 2. The yield of the obtained polymer material C' was 198 mg. Thus, the mass ratio of the silicone-based polymer compound (H) to the chain polymer compound (P1) (epoxy resin) penetrating host groups was 3:1.

Comparative Example 14-1

A polymer material was produced in the same manner as in Example 14-1, except that PEG-GLY and DEG were subjected to a polyaddition reaction without producing a film of the silicone-based polymer compound (H).

Fig. 18 shows tensile test results (stroke-test force curves) of the polymeric material C' obtained in Example 14-1. In Fig. 18 (a), "PDMS-TAcyγCD-Pen(1)" refers to a silicone-based polymer compound (H) obtained during the production of Example 14-1, "PDMS-TAcgammaCD⊃Epoxy (1;25)" refers to the polymer material C' obtained in Example 14-1, and "Epoxy" refers to the epoxy resin of Comparative Example 14-1.

Figs. 18 clearly shows that the polymer material C' obtained in Example 14-1 has excellent mechanical properties and is a tough material.

Example 15-1

Following the reaction scheme shown in Fig. 19, a polymer material C' having a movable crosslinked structure as shown in Fig. 2 was produced. PDMS-SH used in Example 1, PAcγCDAAmMe obtained in Production Example 1, pentene, propanediol (POD), and polytetrahydrofuran (PTHF, number average molecular weight: about 1000) were dissolved in 10 mL of dichloromethane (DCM) to prepare a starting material liquid. After Irgacure 1173 (registered trademark) as a photoinitiator was added to the solution so that the amount of Irgacure 1173 was 0.1 eq. relative to the SH group in PDMS-SH, the resulting mixture was irradiated with a Hg lamp for 60 minutes to allow the reaction to proceed. Subsequently, DBTDA (dibutyltin dilaurate) as a tin catalyst and hexamethylene diisocyanate (HDI) were added, and the resulting mixture was stirred at 25°C for 24 hours. The obtained polymerization mixture was poured into a cube mold (size: 50 mm x 50 mm x 20 mm) made of Teflon (registered trademark) and allowed to stand and dried at 25°C for 16 hours or more, thus obtaining a polymer material C' having a movable crosslinked structure as shown in Fig 2.

Examples 15-2 to 15-5

Polymer materials C' (chain polymer compounds (P1) = urethane resins) having a movable crosslinked structure as shown in Fig. 2 were obtained in the same manner as in Example 15-1, except that the amount of each starting material used was changed according to the formulation table shown in Table 4.

Table 4

| Sample | PU | | | | | | | PDMS-SH / mg | TAcyCD AAmMe / mg | Pentene / mg | IRGACURE / mg |
|---|---|---|---|---|---|---|---|---|---|---|---|
| | PTHF | | HDI | | POD | | DBTDA | | | | |
| | mg | mmol | mg | mmol | mg | mmol | mg | | | | |
| PDMS - TAcγCD (50) - Pen ⊃ PU | 500 | 0.5 | 177 | 1.1 | 38 | 0.5 | 2.5 | 513 (10 eq) | 150 (1 eq) | 40 (9 eq) | 11 (1 eq) |
| PDMS - TAcγCD (60) - Pen ⊃ PU | 400 | 0.4 | 141 | 0.8 | 30 | 0.4 | 2.5 | 616 (10 eq) | 180 (1 eq) | 49 (9 eq) | 13 (1 eq) |
| PDMS - TAcγCD (70) - Pen ⊃ PU | 300 | 0.3 | 106 | 0.6 | 23 | 0.3 | 2.5 | 719 (10 eq) | 210 (1 eq) | 57 (9 eq) | 15 (1 eq) |
| PDMS - TAcγCD (80) - Pen ⊃ PU | 200 | 0.2 | 71 | 0.4 | 15 | 0.2 | 2.5 | 821 (10 eq) | 241 (1 eq) | 65 (9 eq) | 17 (1 eq) |
| PDMS - TAcγCD (90) - Pen ⊃ PU | 100 | 0.1 | 35 | 0.2 | 8 | 0.1 | 2.5 | 924 (10 eq) | 271 (1 eq) | 73 (9 eq) | 19 (1 eq) |

Table 5 summarizes the results of mechanical properties of Examples 15-1 to 15-5. These results clearly show that mechanical properties can be controlled by adjusting the ratio of the silicone-based polymer compound (H) and the chain polymer compound (P1), and that in particular, when the silicone-based polymer compound (H) is used in an amount of 70 mass% or 80 mass%, significantly improved toughness can be provided.

Table 5

| Example/ Comparative Example | Young's modulus (MPa) | Fracture energy ($MJ\cdot m^{-3}$) |
|---|---|---|
| Example 15-1 | 9.22 ± 0.62 | 0.04 ± 0.003 |
| Example 15-2 | 11.36 ± 1.22 | 0.02 ± 0.002 |
| Example 15-3 | 5.97 ± 0.98 | 0.50 ± 0.17 |
| Example 15-4 | 2.88 ± 0.55 | 0.55 ± 0.12 |
| Example 15-5 | 2.42 ± 0.57 | 0.02 ± 0.01 |

Example 16-1

A polymer material C' comprising 80 mass% of a silicone-based polymer compound (H) (other than urethane resin) and 20 mass% of a chain polymer compound (P1) (urethane resin) was produced in the same manner as in Example 15-1. In the production, equivalent x of PAcγCDAAmMe (the product obtained in Production Example 1) in the silicone-based polymer compound (H) relative to the SH group of PDMS-SH was set to 1 eq.

Example 16-2

A polymer material C' was produced in the same manner as in Example 16-1, except that equivalent x was changed to 2 eq.

Example 16-3

A polymer material C' was produced in the same manner as in Example 16-1, except that equivalent x was changed to 3 eq.

Comparative Example 16-1

A polymer material C' was produced in the same manner as in Example 16-1, except that equivalent x was changed to 0 eq.

Table 6 shows production conditions for the polymer materials obtained in Examples 16-1 to 16-3 and Comparative Example 16-1 (x = 0 in Comparative Example 16-1, and x = 1, 2, and 3 in Examples 16-1, 16-2, and 16-3, respectively).

Table 6

| Sample | PU | | | | | | | PDMS-SH / mg | TAcγCD AAmMe / mg | Pentene / mg | IRGACURE 1173 / mg |
|---|---|---|---|---|---|---|---|---|---|---|---|
| | PTHF | | HDI | | POD | | DBTDA | | | | |
| | mg | mmol | mg | mmol | mg | mmol | mg | | | | |
| *X* = 0 | 200 | 0.2 | 71 | 0.4 | 15 | 0.2 | 2.5 | 1032 (10 eq) | 0 (0 eq) | 90 (10 eq) | 21 (1 eq) |
| X = 1 | 200 | 0.2 | 71 | 0.4 | 15 | 0.2 | 2.5 | 821 (10 eq) | 241 (1 eq) | 65 (9 eq) | 17 (1 eq) |
| *X* = 2 | 200 | 0.2 | 71 | 0.4 | 15 | 0.2 | 2.5 | 682 (10 eq) | 400 (2 eq) | 48 (8 eq) | 14 (1 eq) |
| *X* = 3 | 200 | 0.2 | 71 | 0.4 | 15 | 0.2 | 2.5 | 583 (10 eq) | 512 (3 eq) | 35 (7 eq) | 12 (1 eq) |

Fig. 20 shows the results of mechanical properties of Examples 16-1 to 16-3. Table 7 summarizes Fig. 20. These results show that as equivalent x adjusted at the time of production increases, the breaking strain decreases and the elastic modulus (Young's modulus) increases. This is presumably because formation of movable crosslinking between the silicone-based polymer compound (H) and the chain polymer compound (P1) contributes to mechanical properties. Further, the polymer materials obtained in Examples 16-1 to 16-3 had the characteristic that toughness (i.e., fracture energy) remained nearly constant in spite of an increase in Young's modulus.

Table 7

| Example! Comparative Example | Young's modulus (MPa) | Fracture energy ($MJ \cdot m^{-3}$) |
|---|---|---|
| Example 16-1 (x = 1) | 2.88 ± 0.55 | 0.55 ± 0.12 |
| Example 16-2 (x = 2) | 7.95 ± 0.22 | 0.60 ± 0.05 |
| Example 16-3 (x = 3) | 19.62 ± 1.04 | 0.48 ± 0.08 |

As shown in Fig. 21, the polymer material obtained in Comparative Example 16-1, wherein x = 0 (i.e., not containing PAcγCDAAmMe), was an opaque material due to phase separation and could not be subjected to a tensile test, whereas the polymer materials obtained in Examples 16-1 to 16-3, wherein x = 1, 2, and 3, respectively (i.e., containing PAcγCDAAmMe), showed enhanced transparency and improved compatibility due to movable crosslinking being formed.

Example 17-1

A polymer material C' was produced in the same manner as in Example 15-1 so that the obtained polymer material C consisted of 80 mass% of a silicone-based polymer compound (H) (other than urethane resin) and 20 mass% of a chain polymer compound (P1) (urethane resin). In the production, equivalent x of PAcγCDAAmMe (Production Example 1) relative to the SH group of PDMS-SH in the silicone-based polymer compound (H) was set to 2 eq. The molar ratio y of PTHF and POD (i.e., POD/(POD + PTHF) value; same applies hereafter) was set to 0.

Example 17-2

A polymer material C' was produced in the same manner as in Example 17-1, except that the molar ratio y was changed to 33.

Example 17-3

A polymer material C' was produced in the same manner as in Example 17-1, except that the molar ratio y was changed to 50.

Example 17-4

A polymer material C' was produced in the same manner as in Example 17-1, except that the molar ratio y was changed to 64.

Example 17-5

A polymer material C' was produced in the same manner as in Example 17-1, except that the molar ratio y was changed to 75.

Table 8 shows production conditions for the polymer materials obtained in Examples 17-1 to 17-5 (y = 0, 33, 50, 64, and 75, in that order).

Table 8

| Sample | PU | | | | | | | PDMS-SH / mg | TAcγCD AAmMe / mg | Pentene / mg | IRGACURE 1173 / mg |
|---|---|---|---|---|---|---|---|---|---|---|---|
| | PTHF | | HDI | | POD | | DBTDA | | | | |
| | mg | mmol | mg | mmol | mg | mmol | mg | | | | |
| *y* = 0 | 200 | 0.2 | 35 | 0.2 | a | 0 | 2.5 | 562 (10 eq) | 329 (2 eq) | 39 (8 eq) | 12 (1 eq) |
| *y* = 33 | 200 | 0.2 | 53 | 0.3 | 8 | 0.1 | 2.5 | 622 (10 eq) | 364 (2 eq) | 44 (8 eq) | 13 (1 eq) |
| *y* = 50i | 200 | 0.2 | 71 | 0.4 | 15 | 0.2 | 2.5 | 682 (10 eq) | 400 (2 eq) | 48 (8 eq) | 14 (1 eq) |
| *y* = 64 | 200 | 0.2 | 106 | 0.6 | 30 | 0.4 | 2.5 | 803 (10 eq) | 470 (2 eq) | 56 (8 eq) | 16 (1 eq) |
| *y* = 75 | 200 | 0.2 | 141 | 0.8 | 46 | 0.6 | 2.5 | 923 (10 eq) | 541 (2 eq) | 65 (8 eq) | 19 (1 eq) |

Fig. 22 shows the results of mechanical properties of Examples 17-1 to 17-5. Table 9 summarizes Fig. 22. The results confirmed obvious mechanical properties due to a difference in y (i.e., the molar ratio of PTHF and POD). When y was 0, toughness (fracture energy) was increased approximately 5-fold while maintaining the same level of Young's modulus as that of Example 15-1.

Table 9

| Example/ Comparative Example | Young's modulus (MPa) | Fracture energy ($MJ \cdot m^{-3}$) |
|---|---|---|
| Example 17-1 (y = 0) | 5.91 ± 0.50 | 2.66 ± 0.42 |
| Example 17-2 (y = 33) | 3.54 ± 0.46 | 0.24 ± 0.04 |
| Example 17-3 (y = 50) | 7.95 ± 0.22 | 0.60 ± 0.05 |
| Example 17-4 (y = 64) | 11.1 ± 1.48 | 0.06 ± 0.02 |
| Example 17-5 (y = 75) | 13.41 ± 2.34 | 0.15 ± 0.07 |

The above results show that all of the silicone-based polymer materials obtained in the Examples have excellent mechanical properties. As for transparency, although Table 1 shows only the results of the polymer materials obtained in Examples 1-3 and 3-3 and Examples 16-1 to 16-3, it can be presumed from these results that all of the polymer materials obtained in the Examples shown in Table 1 have high transparency. The results demonstrate that all of the polymer materials obtained in the Examples shown in Table 1 have higher transparency than that of Comparative Example 2. Although the results are not shown in figures or the like, the polymer materials obtained in Examples 10-1 and 11-3 were also found to have excellent transparency.

Method for Evaluating Mechanical Properties

Mechanical properties of the polymer materials were evaluated by observing the breaking point of each polymer material in a tensile test (stroke-test force curve test) (AUTOGRAPH, model number: AGX-plus, produced by Shimadzu Corporation). With this breaking point taken as the final point, the maximum stress among the stresses applied up to the final point was determined to be the breaking stress of the polymer material. The tensile test was performed by fixing the lower end of the polymer material in the form of a film with a thickness of 200 to 400 μm material and performing an upward operation of moving the upper end of the polymer material at tension rate of 1 mm/sec. The Young's modulus and the fracture energy of each polymer material were calculated from this measurement.

Transparency Evaluation

Each polymer material was molded into a film with a thickness of 200 to 400 μm. The obtained polymer material films were evaluated for transparency according to the following criteria.

Evaluation Criteria

A: High transparency of the film was visually confirmed and letters could be clearly recognized through the film.
B: Low transparency of the film was visually observed, and the film looked yellowish, or letters could not be clearly recognized through the film.

Evaluation of Photohealing Properties

Each silicone-based polymer compound (H) was evaluated for photohealing properties according to the following procedure. A film of the silicone-based polymer compound (H) obtained in Example 1-4 and a film of the silicone-based polymer compound (H) obtained in Example 4-1 were used as film samples for measurement. Each sample was allowed to swell overnight by adding an acetone solution of Irgacure 184 (registered trademark) dropwise. The concentration and amount of Irgacure 184 added dropwise were adjusted so that Irgacure 184 was present in an amount of 5 mass%, based on the film. After swelling, the film was dried in a draft overnight, then vacuum-dried overnight in a vacuum oven at 35°C. The resulting dried film was then cut to form an x-shaped incision with a utility knife, and the incision portion was irradiated with a mercury lamp to check whether the incision disappeared.

As a result, the incision in the film sample of the silicone-based polymer compound (H) obtained in Example 1-4 became obviously thinner, and the incision in the film sample of the silicone-based polymer compound (H) obtained in Example 4-1 completely disappeared. Even when the same test was performed by adding acetone not containing Irgacure 184 (registered trademark) dropwise, a similar trend was also observed. Accordingly, it was found that the silicone-based polymer compound (H) has excellent photohealing properties and that in particular, the film not containing an SH group in the silicone-based polymer compound (H) has excellent photohealing properties.

## Claims

**1.** A silicone-based polymer compound (H) having a polysiloxane backbone as a main chain, wherein

the polysiloxane backbone has at least one host group in a side chain, and
the host group is a monovalent group formed by removing one hydrogen atom or one hydroxy group from a cyclodextrin or a cyclodextrin derivative.

**2.** A silicone-based polymer compound (G) having a polysiloxane backbone as a main chain, wherein

the polysiloxane backbone has at least one guest group in a side chain, and
the guest group is a group includable in a cyclodextrin or a cyclodextrin derivative.

**3.** A silicone-based polymer compound (HG) having a polysiloxane backbone as a main chain, wherein

the polysiloxane backbone has at least one host group in a side chain and at least one guest group in a side chain,
the host group is a monovalent group formed by removing one hydrogen atom or one hydroxy group from a cyclodextrin or a cyclodextrin derivative, and
the guest group is a group includable in the cyclodextrin or cyclodextrin derivative.

**4.** The silicone-based polymer compound according to claim 1 or 3, wherein a thioether bond is present between Si in the polysiloxane backbone and the host group.

**5.** A silicone-based polymer material comprising

the silicone-based polymer compound (H) of claim 1, and
the silicone-based polymer compound (G) of claim 2, wherein the host group includes the guest group.

**6.** A silicone-based polymer material comprising the silicone-based polymer compound (HG) of claim 3, wherein the host group and the guest group are intermolecularly bound.

**7.** A silicone-based polymer material comprising a crosslinked structure containing the silicone-based polymer compound (H) of claim 1,
wherein the crosslinked structure has a structure in which the at least one host group of the silicone-based polymer compound (H) is penetrated by the main chain of another silicone-based polymer compound (H).

**8.** The silicone-based polymer material of claim 7, further comprising a chain polymer compound (P1), wherein the chain polymer compound (P1) penetrates a network of the crosslinked structure.

**9.** A silicone-based polymer material comprising a crosslinked structure containing

the silicone-based polymer compound (H) of claim 1, and
a chain polymer compound (P1),

wherein the crosslinked structure has a structure in which the at least one host group of the silicone-based polymer compound (H) is penetrated by the chain polymer compound (P1).

**10.** A silicone-based polymer material comprising

the silicone-based polymer compound (H) of claim 1 and
a chain polymer compound (P2) other than the silicone-based polymer compound (H),

wherein

the chain polymer compound (P2) has at least one host group in a side chain, and the host group is a monovalent group formed by removing one hydrogen atom or one hydroxy group from a cyclodextrin or a cyclodextrin derivative,
the at least one host group of the silicone-based polymer compound (H) is penetrated by the main chain of another silicone-based polymer compound (H), and
the at least one host group of the chain polymer compound (P2) is penetrated by the main chain of another chain polymer compound (P2).

**11.** An optical material comprising the silicone-based polymer compound of any one of claims 1 to 4.

**12.** An optical material comprising the silicone-based polymer material of any one of claims 5 to 10.

**13.** A method for producing the silicone-based polymer compound of any of claims 1 to 4, comprising reacting a polysiloxane compound with at least one compound containing an alkenyl group, wherein the polysiloxane compound has an -SH group and/or an -Si-H group.

Fig. 1

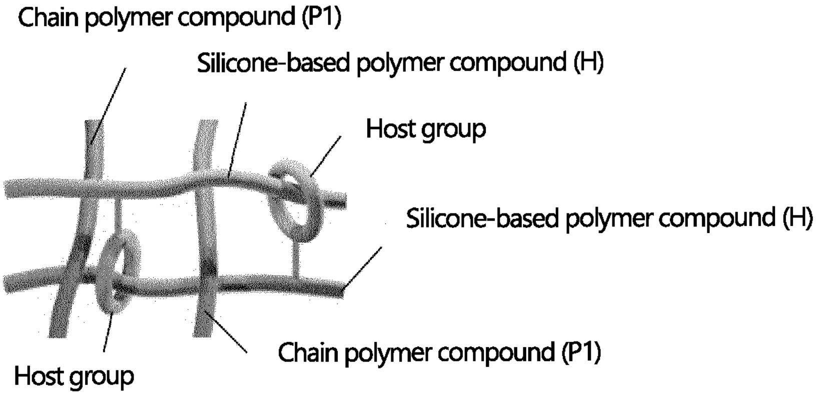


Fig. 2

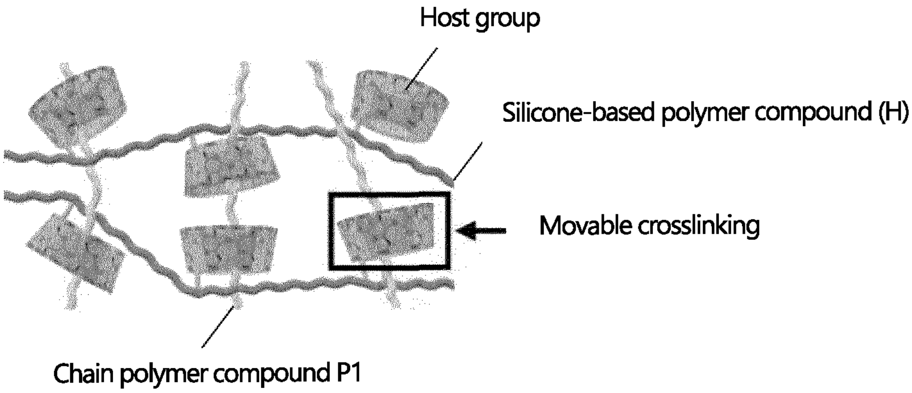


Fig. 3

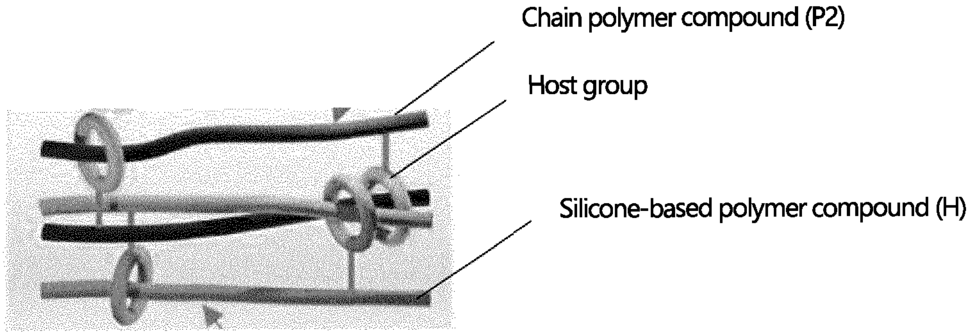

Fig. 4

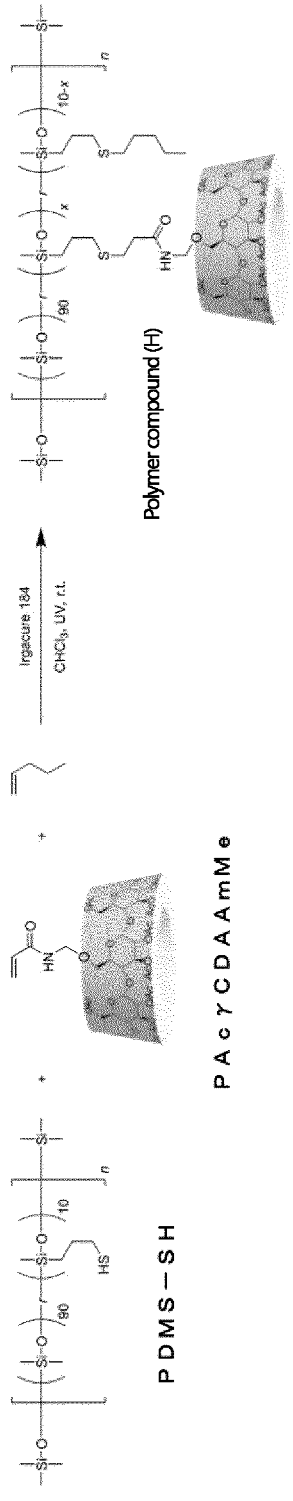
PDMS−SH
PAcγCDAAmMe
Irgacure 184
$CHCl_3$, UV, r.t.
Polymer compound (H)

Fig. 5

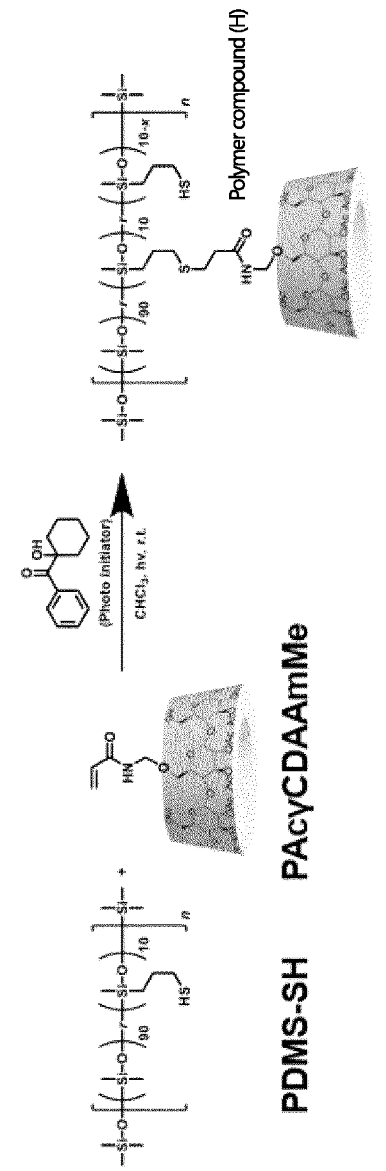
PDMS-SH
PAcyCDAAmMe
(Photo initiator)
$CHCl_3$, hν, r.t.
Polymer compound (H)

Fig. 6

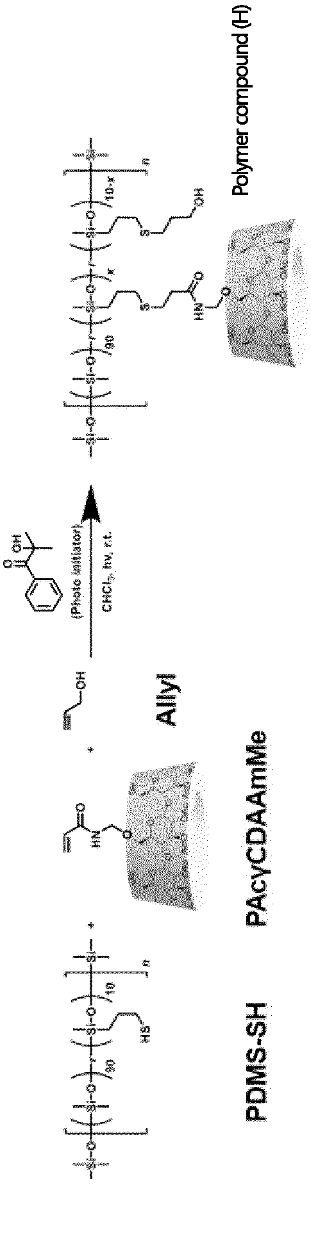


PDMS-SH

PAcyCDAAmMe

Allyl

Polymer compound (H)

Fig. 7

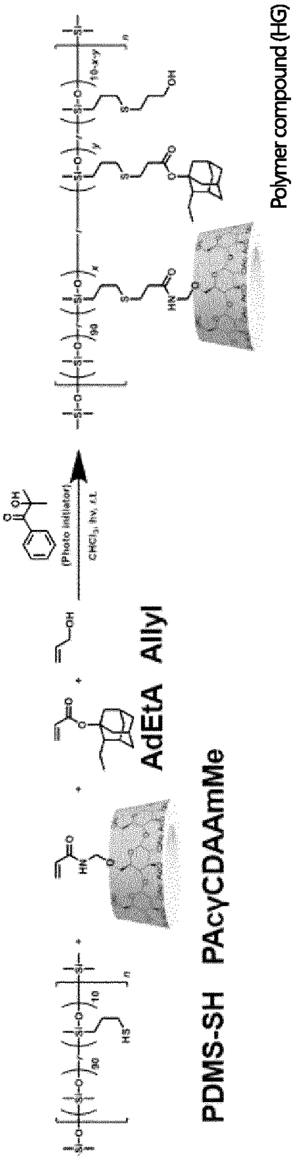
PDMS-SH
PAcyCDAAmMe
AdEtA
Allyl
(Photo initiator)
CHCl3, hν, r.t.
Polymer compound (HG)

Fig. 8

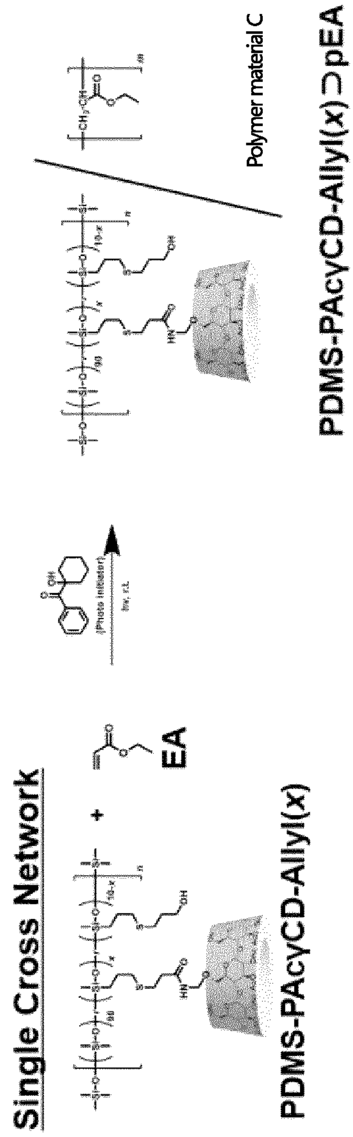
Single Cross Network
PDMS-PAcyCD-Allyl(x)
EA
(Photo initiator)
hν, r.t.
Polymer material C
PDMS-PAcyCD-Allyl(x)⊃pEA

Fig. 9

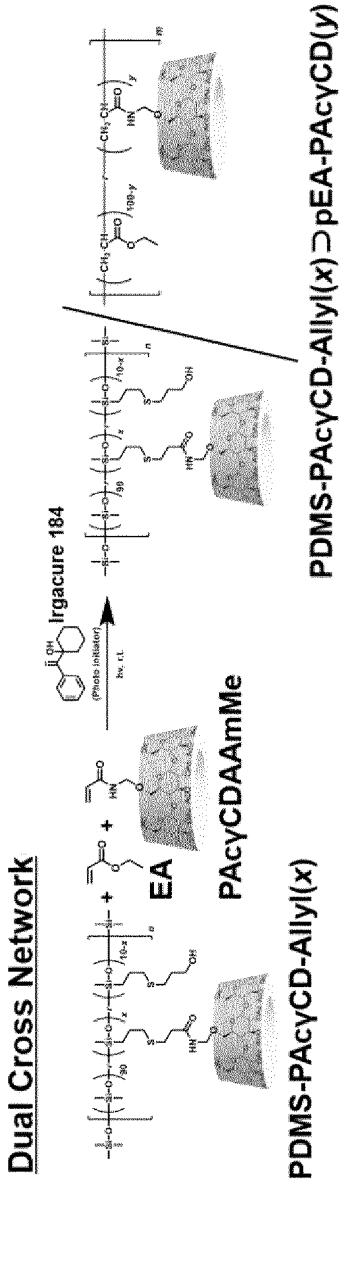
Dual Cross Network
EA
PAcγCDAAmMe
PDMS-PAcγCD-Allyl(x)
Irgacure 184
(Photo initiator)
hν, r.t.
PDMS-PAcγCD-Allyl(x)⊃pEA-PAcγCD(y)

Fig. 10

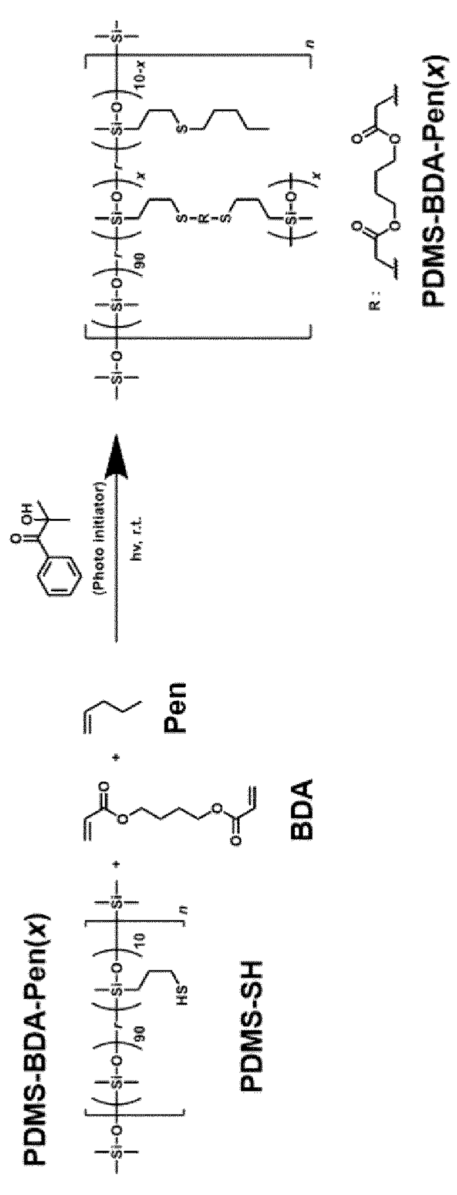
PDMS-BDA-Pen(x)
PDMS-SH
BDA
Pen
(Photo initiator)
hv, r.t.
PDMS-BDA-Pen(x)

Fig. 11

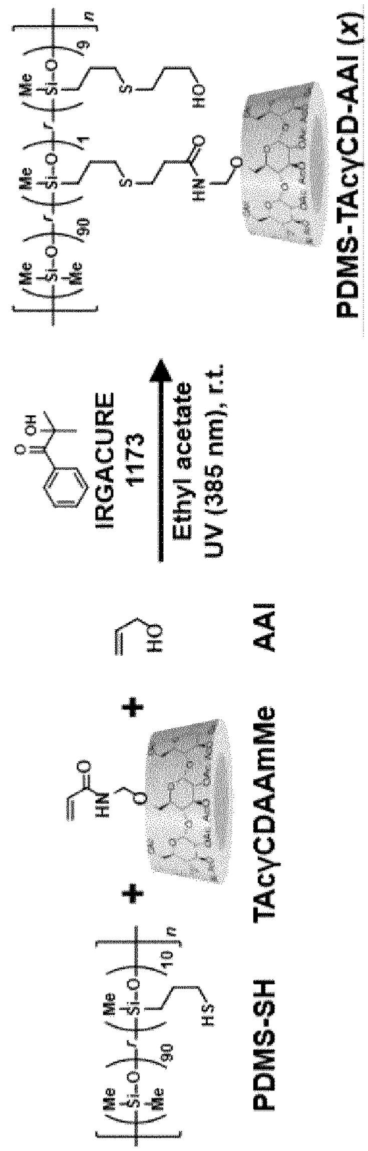


PDMS-SH + TAcγCDAAmMe + AAl

PDMS-TAcγCD-AAl (x)

Fig. 12

(a)

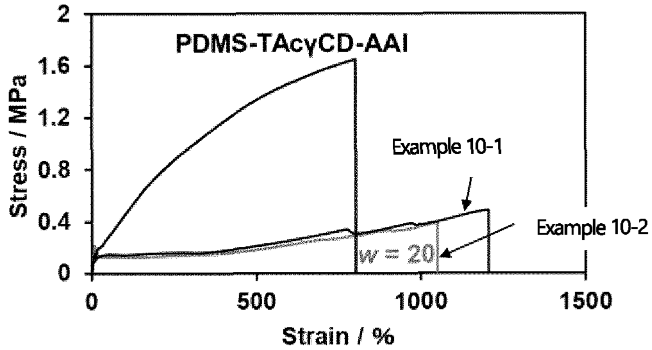
PDMS-TAcγCD-AAl
Example 10-1
Example 10-2
w = 20
Stress / MPa
Strain / %
2
1.6
1.2
0.8
0.4
0
0
500
1000
1500

(b)

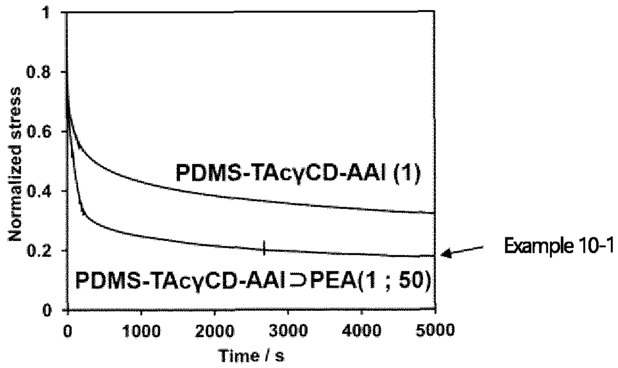
PDMS-TAcγCD-AAl (1)
Example 10-1
PDMS-TAcγCD-AAl⊃PEA(1 ; 50)
Normalized stress
Time / s
1
0.8
0.6
0.4
0.2
0
0
1000
2000
3000
4000
5000

(c)

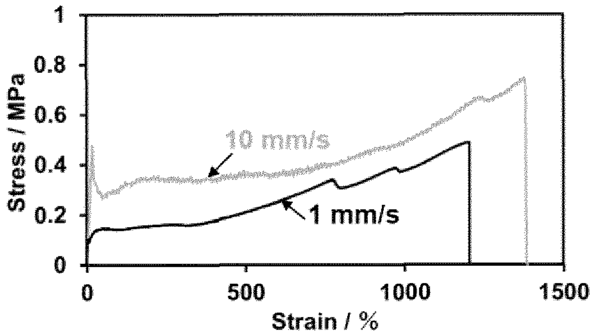
10 mm/s
1 mm/s
Stress / MPa
Strain / %
1
0.8
0.6
0.4
0.2
0
0
500
1000
1500

Fig. 13

(a)

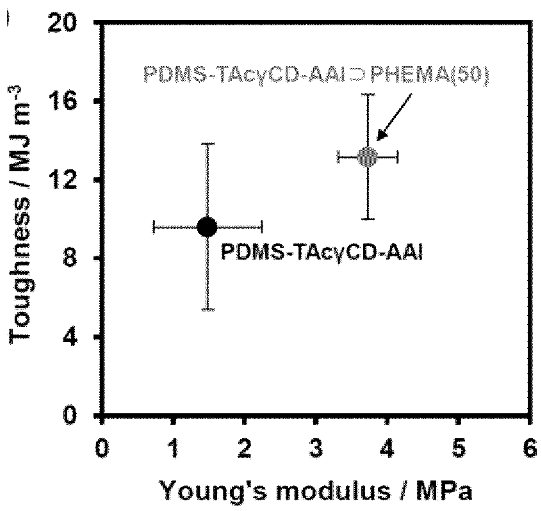
PDMS-TAcγCD-AAl⊃PHEMA(50)
PDMS-TAcγCD-AAl
Toughness / MJ m-3
Young's modulus / MPa
0
4
8
12
16
20
0
1
2
3
4
5
6

(b)

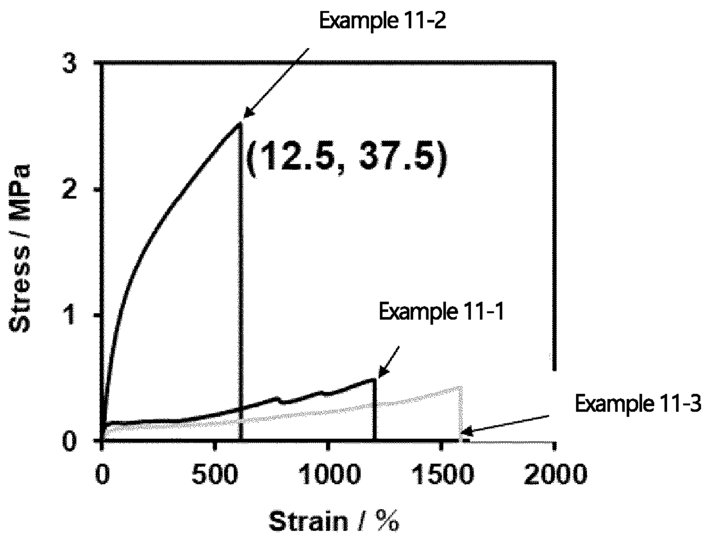
Example 11-2
(12.5, 37.5)
Example 11-1
Example 11-3
Stress / MPa
Strain / %
0
1
2
3
0
500
1000
1500
2000

Fig. 14

(a)

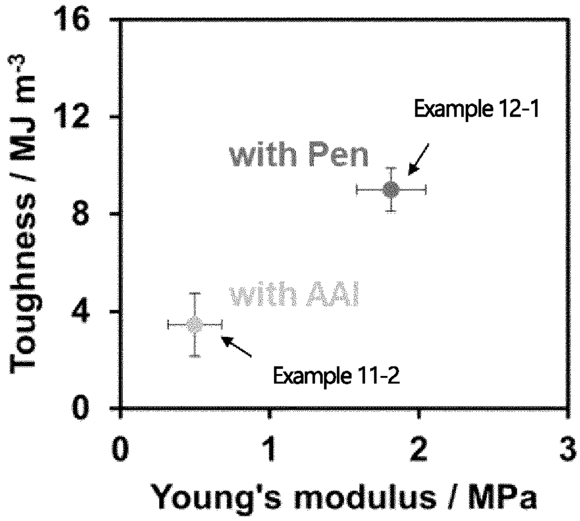
16
12
8
4
0
Toughness / MJ m-3
with Pen
Example 12-1
with AAI
Example 11-2
0
1
2
3
Young's modulus / MPa

(b)

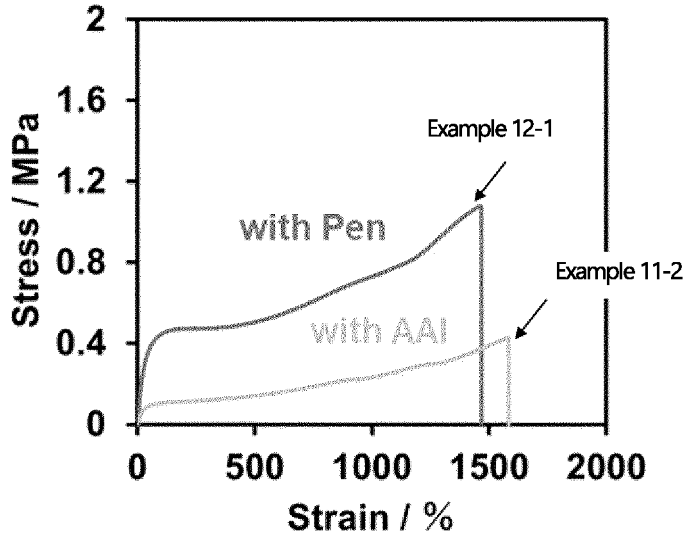
2
1.6
1.2
0.8
0.4
0
Stress / MPa
Example 12-1
with Pen
Example 11-2
with AAI
0
500
1000
1500
2000
Strain / %

Fig. 15

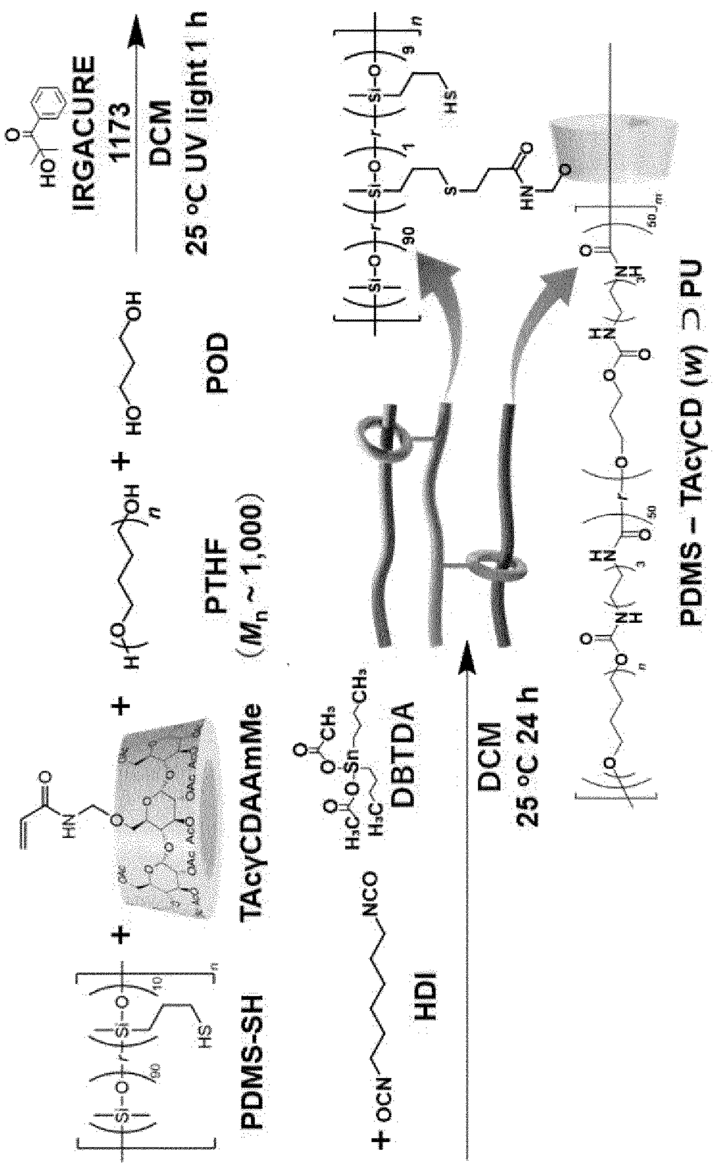
PDMS-SH
TAcγCDAAmMe
PTHF
($M_n$ ~ 1,000)
POD
IRGACURE
1173
DCM
25 °C UV light 1 h
HDI
DBTDA
DCM
25 °C 24 h
PDMS – TAcγCD (w) ⊃ PU

Fig. 16

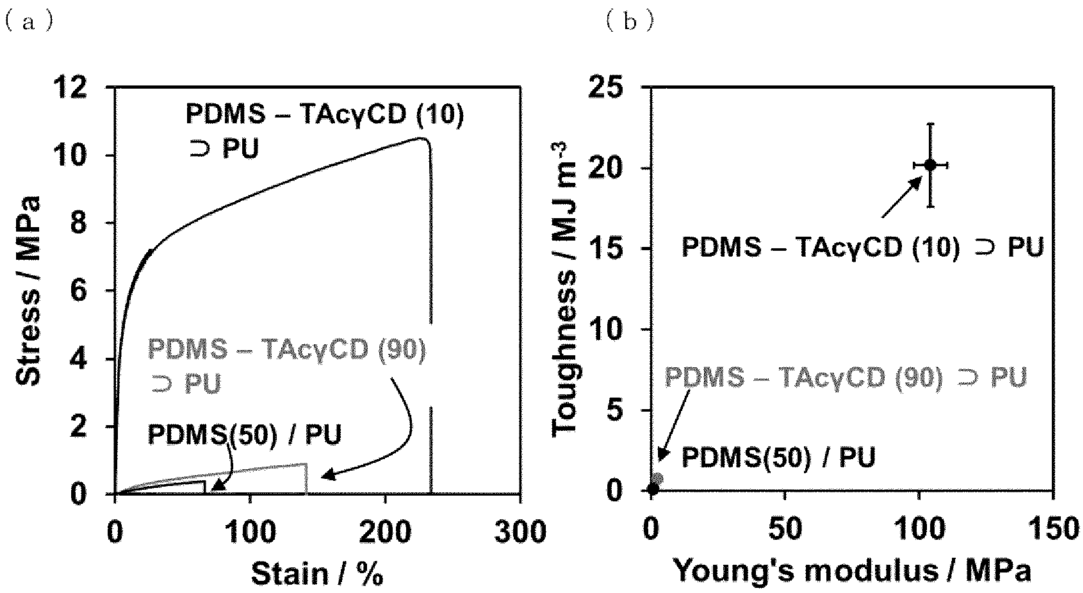
(a)
(b)
12
10
8
6
4
2
0
0
100
200
300
Stain / %
Stress / MPa
PDMS – TAcγCD (10) ⊃ PU
PDMS – TAcγCD (90) ⊃ PU
PDMS(50) / PU
25
20
15
10
5
0
0
50
100
150
Young's modulus / MPa
Toughness / MJ m-3
PDMS – TAcγCD (10) ⊃ PU
PDMS – TAcγCD (90) ⊃ PU
PDMS(50) / PU

Fig. 17

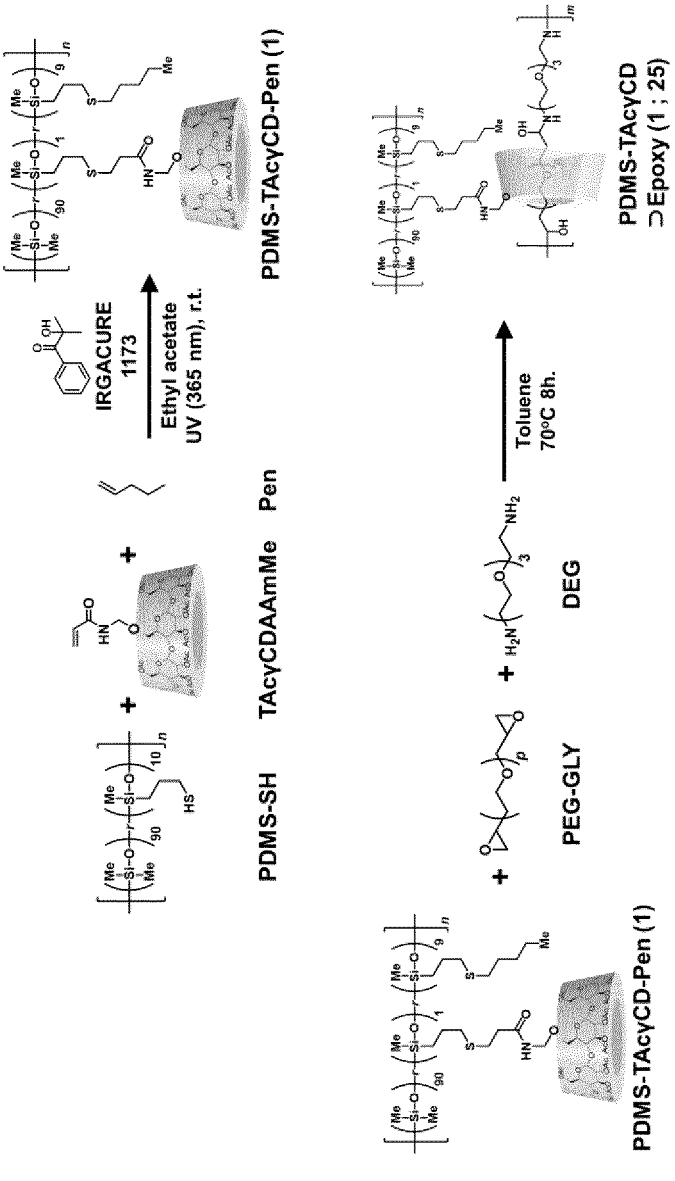
PDMS-SH
TAcγCDAAmMe
Pen
IRGACURE
1173
Ethyl acetate
UV (365 nm), r.t.
PDMS-TAcγCD-Pen (1)
PDMS-TAcγCD-Pen (1)
PEG-GLY
DEG
Toluene
70°C 8h.
PDMS-TAcγCD
⊃Epoxy (1 ; 25)

Fig. 18

(a)

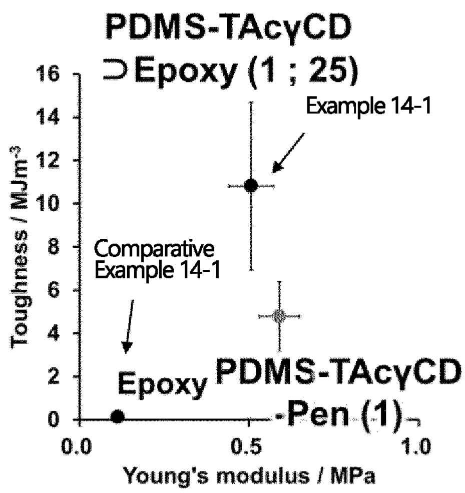
PDMS-TAcγCD
⊃Epoxy (1 ; 25)
Example 14-1
Comparative
Example 14-1
Epoxy
PDMS-TAcγCD
-Pen (1)
Toughness / MJm^-3
16
14
12
10
8
6
4
2
0
0.0
0.5
1.0
Young's modulus / MPa

(b)

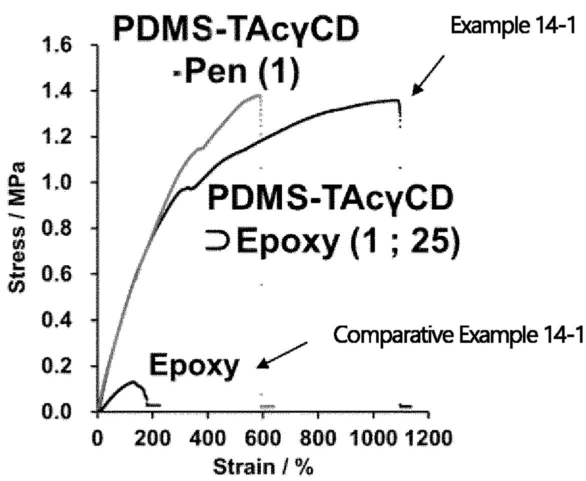
PDMS-TAcγCD
-Pen (1)
Example 14-1
PDMS-TAcγCD
⊃Epoxy (1 ; 25)
Comparative Example 14-1
Epoxy
Stress / MPa
1.6
1.4
1.2
1.0
0.8
0.6
0.4
0.2
0.0
0
200
400
600
800
1000
1200
Strain / %

Fig. 19

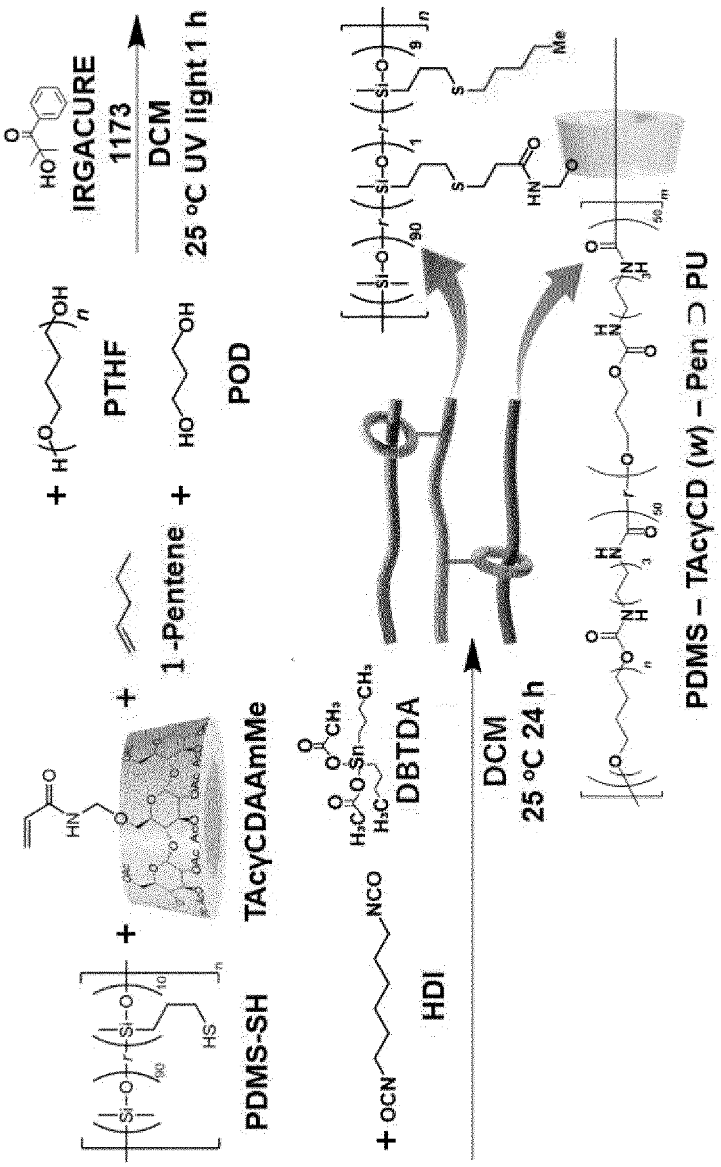
PDMS-SH
TAcγCDAAmMe
1-Pentene
PTHF
POD
IRGACURE
1173
DCM
25 °C UV light 1 h
HDI
DBTDA
DCM
25 °C 24 h
PDMS – TAcγCD (w) – Pen ⊃ PU

Fig. 20

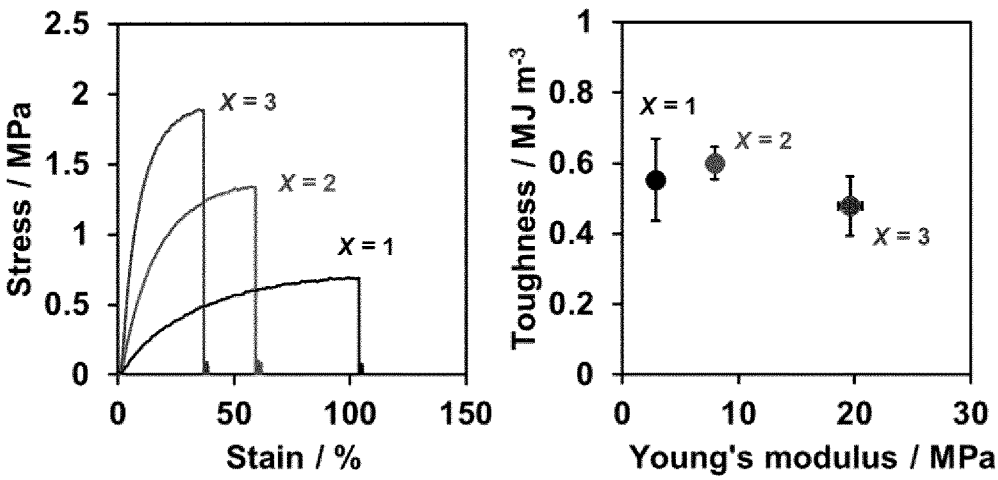
2.5
2
1.5
1
0.5
0
Stress / MPa
X = 3
X = 2
X = 1
0
50
100
150
Stain / %
1
0.8
0.6
0.4
0.2
0
Toughness / MJ m-3
X = 1
X = 2
X = 3
0
10
20
30
Young's modulus / MPa

Fig. 21

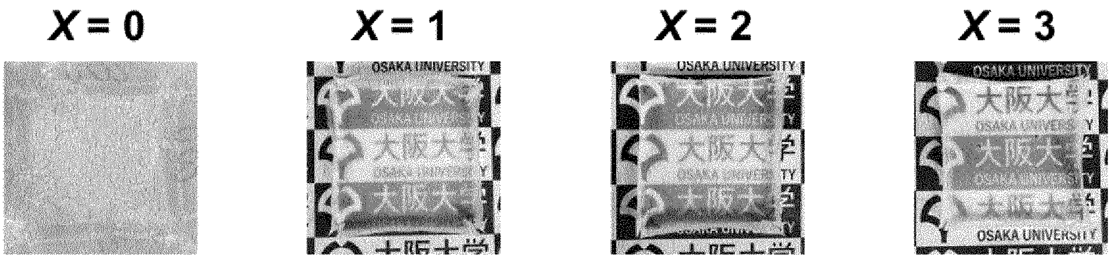
X = 0
X = 1
X = 2
X = 3
OSAKA UNIVERSITY
大阪大学

Fig. 22

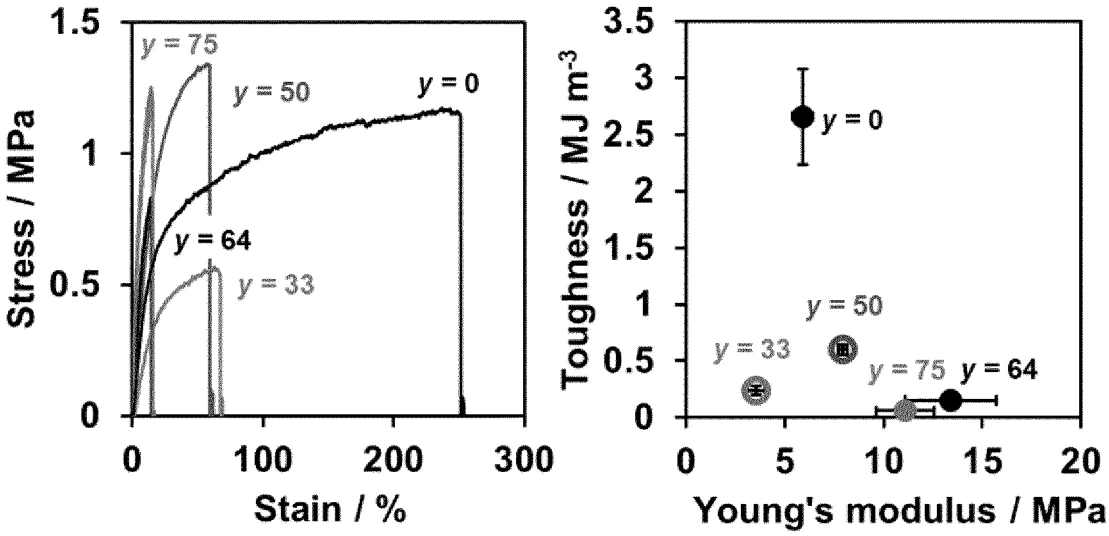
Stress / MPa
Stain / %
y = 75
y = 50
y = 0
y = 64
y = 33
Toughness / MJ m-3
Young's modulus / MPa

## INTERNATIONAL SEARCH REPORT

International application No.
**PCT/JP2022/028405**

**A. CLASSIFICATION OF SUBJECT MATTER**

***C08G 77/392***(2006.01)i; ***C08K 5/01***(2006.01)i; ***C08L 83/04***(2006.01)i
FI: C08G77/392; C08L83/04; C08K5/01

According to International Patent Classification (IPC) or to both national classification and IPC

**B. FIELDS SEARCHED**

Minimum documentation searched (classification system followed by classification symbols)

C08G77/00-77/62; C08L1/00-101/14; C08K3/00-13/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2021/045203 A1 (OSAKA UNIV.) 11 March 2021 (2021-03-11)<br>claims, paragraphs [0059], [0079], examples 1, 2 | 1-3, 5-12<br>4, 13 |
| X<br>A | WO 2020/139403 A1 (WACRER CHEMIE AG) 02 July 2020 (2020-07-02)<br>claims, examples | 1, 5-6<br>2-4, 7-13 |
| X<br>A | KNUDSEN, Berit et al. Noncovalent linkage of telechelic oligo(dimethylsiloxanes) via end group attachment of host-cyclodextrins and guest-adamantanes or guest-ferrocenes. Journal of Polymer Science. 2013, 51, 2472-2482<br>p. 2478 | 1-2, 5-6<br>3-4, 7-13 |
| X<br>A | NOOMEN, Ahlem et al. Emulsions of β-cyclodextrins grafted to silicone for the transport of antifungal drugs. Materials Science and Engineering C. 2008, 28, 705-715<br>p. 710 | 1-3, 5-6<br>4, 7-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 August 2022** | **06 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

## INTERNATIONAL SEARCH REPORT

International application No.
**PCT/JP2022/028405**

### C. DOCUMENTS CONSIDERED TO BE RELEVANT

| Category* | Citation of document, with indication, where appropriate, of the relevant passages | Relevant to claim No. |
|---|---|---|
| X<br>A | JP 2005-536653 A (WACKER CHEMIE GMBH) 02 December 2005 (2005-12-02)<br>claims, paragraphs [0031]-[0094] | 1-3, 5-6<br>4, 7-13 |
| X<br>A | JP 2000-506554 A (NOVARTIS AG) 30 May 2000 (2000-05-30)<br>particularly, example B15 | 1-3, 5-6<br>4, 7-13 |
| X<br>A | JP 2014-047269 A (TOSHIBA CORP.) 17 March 2014 (2014-03-17)<br>claims, paragraphs [0016], [0127]-[0131] | 1-3, 5-6<br>4, 7-13 |
| X<br>A | US 6316268 B1 (THE REGENTS OF THE UNIVERSITY OF CALIFORNIA) 13 November 2001 (2001-11-13)<br>examples M-N | 1-3, 5-6<br>4, 7-13 |
| A | WO 2018/159791 A1 (OSAKA UNIV.) 07 September 2018 (2018-09-07)<br>entire text | 1-13 |

Form PCT/ISA/210 (second sheet) (January 2015)

**INTERNATIONAL SEARCH REPORT**
**Information on patent family members**

International application No.
**PCT/JP2022/028405**

| Patent document cited in search report | Publication date (day/month/year) | Patent family member(s) | Publication date (day/month/year) |
| --- | --- | --- | --- |
| WO 2021/045203 A1 | 11 March 2021 | (Family: none) | |
| WO 2020/139403 A1 | 02 July 2020 | US 2022/0089873 A1<br>EP 3806818 A1<br>CN 112512494 A<br>KR 10-2021-0053935 A | |
| JP 2005-536653 A | 02 December 2005 | US 2006/0009592 A1<br>claims, paragraph [0044]<br>EP 1865016 A1<br>CN 102070903 A | |
| JP 2000-506554 A | 30 May 2000 | US 6271332 B1<br>particularly, example B15<br>EP 868457 A1 | |
| JP 2014-047269 A | 17 March 2014 | (Family: none) | |
| US 6316268 B1 | 13 November 2001 | WO 1998/022795 A1<br>AU 5588798 A | |
| WO 2018/159791 A1 | 07 September 2018 | EP 3590972 A1<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021045203 A


### Non-patent literature cited in the description


- *Adv. Mater.,* 2018, vol. 30, 1706846